# EUROPEAN PATENT APPLICATION

(11) **EP 4 629 567 A1**
(43) Date of publication of application: **08.10.2025**
(21) Application number: 23917308.1
(22) Date of filing: 20.12.2023
(51) Int. Cl.: H04L 12/28

(54) **MANAGEMENT METHOD FOR SMART HOME DEVICE, AND DEVICE**

(30) Priority: 18.01.2023 CN 202310094968
(71) Applicant: Huawei Technologies Co., Ltd., Shenzhen, Guangdong 518129 (CN)
(72) Inventor: YAN, Guoqi, Shenzhen, Guangdong 518129 (CN); ZHAO, Xin, Shenzhen, Guangdong 518129 (CN); FU, Jinxin, Shenzhen, Guangdong 518129 (CN); ZHANG, Yunxiang, Shenzhen, Guangdong 518129 (CN)
(74) Representative: Isarpatent
(86) International application number: PCT/CN2023/140353
(87) International publication number: WO 2024/152841

(57) **Abstract**

A smart home device management method and a device are provided. The method includes: A first device sends a first message to at least one gateway bound to the first device, where the first message includes an identifier of a smart home device, and the first message indicates the at least one gateway to detect signal quality between the at least one gateway and the smart home device and report the signal quality to a second device when the smart home device is in a to-be-paired state; and further, after the at least one gateway reports the signal quality between the at least one gateway and the smart home device to the second device, the second device may select a first gateway from the at least one gateway based on the signal quality between the at least one gateway and the smart home device, and indicate the first gateway to be paired with the smart home device. In this way, a gateway with best signal quality between the gateway and the smart home device is paired with the smart home device. This effectively ensures communication quality, and avoids a problem that a gateway manually selected by a user does not match actual signal quality.

## Description

### CROSS-REFERENCE TO RELATED APPLICATIONS

This application claims priority to Chinese Patent Application No. 202310094968.4, filed with the China National Intellectual Property Administration on January 18, 2023, and entitled "SMART HOME DEVICE MANAGEMENT METHOD AND DEVICE", which is incorporated herein by reference in its entirety.

### TECHNICAL FIELD

This application relates to the field of terminal technologies, and in particular, to a smart home device management method and a device.

### BACKGROUND

With rapid development of smart home, increasing users choose to integrate smart home devices used for security, lighting, environment, health, kitchen appliances, home decoration, and cleaning by using intelligent communication, control, and audio/video technologies, to build an efficient management system for residential facilities and home agendas, so as to improve home security, convenience, comfort, and aesthetics, and build a living environment that is environmentfriendly and energy-saving. For example, a mobile phone or a central display may communicate with the smart home device, so that the user manages the smart home device via the mobile phone or the central display.

Because the smart home device usually does not have a network connection capability, the smart home device needs to be first paired with a gateway, so that the smart home device can be connected to a network through the paired gateway. However, how to implement pairing between the smart home device and the gateway still needs to be further studied.

### SUMMARY

An objective of embodiments of this application is to provide a smart home device management method and a device, to implement pairing between a smart home device and a gateway.

According to a first aspect, a smart home device management method is provided. The method is applicable to a first device. In the method, the first device sends a first message to at least one gateway bound to the first device, where the first message includes an identifier of a smart home device, the first message indicates the at least one gateway to detect signal quality between the at least one gateway and the smart home device and report the signal quality to a second device when the smart home device is in a to-be-paired state. The first device receives a second message from a first gateway in the at least one gateway, where the second message indicates that the first gateway and the smart home device are successfully paired. The second message is sent by the first gateway after the first gateway and the smart home device are successfully paired based on a third message from the second device, and the third message indicates the first gateway to be paired with the smart home device. The third message is sent by the second device to the first gateway selected from the at least one gateway based on the signal quality reported by the at least one gateway.

According to the foregoing method, because the first device sends the first message to all the gateways bound to the first device, the second device may select, based on signal quality between different gateways and the smart home device, a gateway with best signal quality between the second device and the smart home device to be paired with the smart home device. This effectively ensures communication quality, and avoids a problem that a gateway manually selected by a user does not match actual signal quality.

In a possible design, signal quality between the first gateway and the smart home device is greater than or equal to signal quality between another gateway in the at least one gateway and the smart home device.

In a possible design, before sending the first message to the at least one gateway bound to the first device, the method further includes: sending a fourth message to the smart home device when detecting that the smart home device approaches the first device, where the fourth message is used to request the identifier of the smart home device; and receiving a fifth message from the smart home device, where the fifth message includes the identifier of the smart home device.

According to the foregoing method, when detecting that the smart home device approaches the first device, the first device may send the fourth message to the smart home device by using an NFC technology. This is convenient to implement.

In a possible design, before detecting that the smart home device approaches the first device, the method further includes: detecting a first operation, where the first operation is used to request to add the smart home device to a first scenario; and displaying first prompt information in response to the first operation, where the first prompt information is used to prompt a user to perform one-tap between the smart home device and the first device.

According to the foregoing method, when the smart home device is not bound to the first device or the smart home device is not paired with a gateway, the user may perform service processing (for example, add the smart home device to the first scenario), to ensure experience continuity.

In a possible design, after sending the first message to the at least one gateway bound to the first device, and before the receiving the second message from the first gateway in the at least one gateway, the method further includes: adding the smart home device to the first scenario, and displaying second prompt information, where the second prompt information is used to prompt the user to move the smart home device close to a to-be-paired gateway.

In a possible design, before the detecting that the smart home device approaches the device, the method further includes: detecting a second operation, where the second operation is used to request the smart home device to be associated with at least one scenario; and displaying first prompt information in response to the second operation, where the first prompt information is used to prompt the user to perform one-tap between the smart home device and the first device.

According to the foregoing method, when the smart home device is not bound to the first device or the smart home device is not paired with the gateway, the user may perform service processing (for example, associate the smart home device with the at least one scenario), to ensure experience continuity.

In a possible design, after sending the first message to the at least one gateway bound to the first device, and before receiving the second message from the first gateway in the at least one gateway, the method further includes: associating the smart home device with the at least one scenario, and displaying second prompt information, where the second prompt information is used to prompt the user to move the smart home device close to a to-be-paired gateway.

In a possible design, the fifth message further includes one or more of the following: type information of the smart home device, where the type information indicates a type of the smart home device; and status information of the smart home device, where the status information indicates that the smart home device is in a to-be-bound state.

In this way, the first device may learn of the type of the smart home device based on the type information, and learn, based on the status information, that the smart home device is in the to-be-bound state.

In a possible design, before sending the first message to the at least one gateway bound to the first device, the method further includes: sending a sixth message to a third device, where the sixth message includes the identifier of the smart home device; and receiving a seventh message sent by the third device based on the sixth message, where the seventh message includes a virtual identifier and/or authentication information of the smart home device, the virtual identifier is associated with the identifier, and the authentication information is used by the smart home device to communicate with a gateway paired with the smart home device. The first message further includes the virtual identifier and/or the authentication information.

In this way, the first device sends the virtual identifier and/or the authentication information to the at least one gateway, to ensure security of communication between a gateway in the at least one gateway and the smart home device after the gateway is successfully paired with the smart home device.

In a possible design, the first device is a mobile phone or a smart home central display.

In a possible design, the second device and the third device are a same device (for example, a cloud server); or the second device and the third device are different devices (for example, the second device is a service hub, and the third device is a cloud server).

According to a second aspect, a smart home device management method is provided. The method is applicable to a second device. In the method, the second device receives signal quality that is between at least one gateway bound to a first device and a smart home device and that is reported by the at least one gateway; selects a first gateway from the at least one gateway based on the signal quality between the at least one gateway and the smart home device; and sends a third message to the first gateway, where the third message indicates the first gateway to be paired with the smart home device.

In a possible design, the method further includes: receiving an eighth message from the first gateway, where the eighth message indicates that a connection between the smart home device and the first gateway is abnormal; and sending a ninth message to the at least one gateway based on the eighth message, where the ninth message indicates the at least one gateway to detect the signal quality between the at least one gateway and the smart home device and report the signal quality to the second device when the smart home device is in a to-be-paired state.

According to a third aspect, a smart home device management method is provided. The method is applicable to a first gateway. In the method, the first gateway receives a first message from a first device, where the first message indicates the first gateway to detect signal quality between the first gateway and the smart home device and report the signal quality to a second device when a smart home device is in a to-be-paired state. The first gateway detects, based on the first message, the signal quality between the first gateway and the smart home device when the smart home device is in the to-be-paired state, and sends the detected signal quality to the second device.

In a possible design, the method further includes: receiving a third message from the second device, where the third message indicates the first gateway to be paired with the smart home device; and performing pairing with the smart home device based on the third message, and sending a second message to the first device after the pairing succeeds, where the second message indicates that the first gateway and the smart home device are successfully paired.

The methods provided in the second aspect and the third aspect correspond to the method provided in the first aspect. For beneficial effect of related technical features in the second aspect and the third aspect, refer to the descriptions in the first aspect. Details are not described again.

According to a fourth aspect, a first device is provided. The first device includes one or more processors, a memory, and a communication module. The memory stores one or more programs, the one or more programs include instructions, and when the instructions are executed by the first device, the first device is enabled to perform the method according to the first aspect.

According to a fifth aspect, a second device is provided. The second device includes one or more processors, a memory, and a communication module. The memory stores one or more programs, the one or more programs include instructions, and when the instructions are executed by the second device, the second device is enabled to perform the method according to the second aspect.

According to a sixth aspect, a first gateway is provided. The first gateway includes one or more processors, a memory, and a communication module. The memory stores one or more programs, the one or more programs include instructions, and when the instructions are executed by the first gateway, the first gateway is enabled to perform the method according to the third aspect.

According to a seventh aspect, a smart home device management system is provided. The system may include the first device according to the fourth aspect, the second device according to the fifth aspect, and the first gateway according to the sixth aspect. These devices may perform the foregoing method through interaction.

For example, the first device is configured to: send a first message to at least one gateway, where the first message includes an identifier of a smart home device, and the first message indicates the at least one gateway to detect signal quality between the at least one gateway and the smart home device and report the signal quality to the second device when the smart home device is in a to-be-paired state. The first gateway is configured to: receive the first message from the first device, and detect signal quality between the first gateway and the smart home device based on the first message and report the signal quality to the second device when the smart home device is in the to-be-paired state. The second device is configured to: receive the signal quality that is between the at least one gateway and the smart home device and that is reported by the at least one gateway, and select the first gateway from the at least one gateway based on the signal quality between the at least one gateway and the smart home device; and send a third message to the first gateway, where the third message indicates the first gateway to be paired with the smart home device. The first gateway is further configured to: receive the third message from the second device, be paired with the smart home device based on the third message, and send a second message to the first device after the pairing succeeds, where the second message is used to notify the first device that the first gateway and the smart home device are successfully paired.

According to an eighth aspect, a chip is provided. The chip is coupled to a memory in a device, and is configured to invoke a program stored in the memory and perform the technical solution provided in any one of the first aspect to the third aspect of embodiments of this application. In embodiments of this application, "coupling" means that two components are directly or indirectly combined with each other.

According to a ninth aspect, a readable storage medium is provided, including instructions. When the instructions are run on the foregoing device, the device is enabled to perform the method according to any one of the first aspect to the third aspect.

According to a tenth aspect, a program product is provided. When the program product runs on a device, the device is enabled to perform the method according to any one of the first aspect to the third aspect.

According to an eleventh aspect, a graphical user interface on a device is provided. The device has a display, one or more memories, and one or more processors. The one or more processors are configured to execute one or more programs stored in the one or more memories. The graphical user interface includes a graphical user interface displayed when the device performs the technical solution provided in the first aspect.

It may be understood that the device, the chip, the readable storage medium, the program product, and the like provided in the foregoing aspects are all applied to the corresponding method provided above. Therefore, for beneficial effect that can be achieved by the device, the chip, the readable storage medium, the program product, and the like, refer to beneficial effect in the corresponding method provided above. Details are not described herein again.

### BRIEF DESCRIPTION OF DRAWINGS

FIG. 1 is a diagram of a mesh network according to an embodiment of this application;
FIG. 2 is a diagram of a communication system applicable to an embodiment of this application;
FIG. 3A is a diagram of a possible hardware structure of a device according to an embodiment of this application;
FIG. 3B is a block diagram of a software structure of a device according to an embodiment of this application;
FIG. 4A is a diagram of an interface of a device according to an embodiment of this application;
FIG. 4B is a diagram of another interface of a device according to an embodiment of this application;
FIG. 5 is a schematic flowchart of pairing between a smart home device and a gateway according to an embodiment of this application;
FIG. 6(a) to FIG. 6(f) are a diagram of human-machine interaction in which a smart home device is paired with a gateway according to an embodiment of this application;
FIG. 7(a) to FIG. 7(f) are a diagram of human-machine interaction of scenario editing according to an embodiment of this application;
FIG. 8 is a diagram of a smart home scenario according to an embodiment of this application;
FIG. 9A to FIG. 9C are a schematic flowchart corresponding to a method according to Embodiment 1 of this application;
FIG. 10(a) to FIG. 10(e) are a diagram of human-machine interaction corresponding to a method according to Embodiment 1 of this application;
FIG. 11A and FIG. 11B are a schematic flowchart corresponding to a method according to Embodiment 2 of this application;
FIG. 12(a) to FIG. 12(e) are a diagram of human-machine interaction corresponding to a method according to Embodiment 2 of this application;
FIG. 13A and FIG. 13B are a schematic flowchart corresponding to a method according to Embodiment 3 of this application;
FIG. 14(a) to FIG. 14(e) are a diagram of human-machine interaction corresponding to a method according to Embodiment 3 of this application;
FIG. 15 is a diagram of a structure of a device (for example, a mobile phone) according to an embodiment of this application;
FIG. 16 is a diagram of a structure of a device (for example, a cloud server) according to an embodiment of this application; and
FIG. 17 is a diagram of a structure of a device (for example, a gateway) according to an embodiment of this application.

### DESCRIPTION OF EMBODIMENTS

First, some terms in embodiments of this application are described.

### (1) Application (application, app)

The application may be a software program that can implement one or more specific functions. Usually, a plurality of applications may be installed on a device, such as a camera application, an SMS message application, an image application, and various mailbox applications. The application mentioned in embodiments of this application may be an application installed when the device is delivered from a factory, or may be an application downloaded from a network or obtained from another device by a user in a process of using the device (for example, an application sent by another device). In embodiments of this application, an application (for example, Huawei AI Life) related to smart home is mainly used as an example for description.

### (2) Short-range wireless communication technology

The short-range wireless communication technology is a communication technology in which two communication parties transmit information through a radio wave within a small range, and generally has the following features. ① The short-range wireless communication technology has low costs, and generally operates on an open unlicensed frequency band. ② The short-range wireless communication technology has low power consumption, and transmit power of a wireless transmitter generally falls within 100 milliwatts (mW) in comparison with a cellular communication technology. ③ The short-range wireless communication technology supports short-range peer-to-peer communication, and a communication distance is generally controlled within tens of meters or hundreds of meters.

For example, the short-range wireless communication technology may include but is not limited to a radio frequency identification (radio frequency identification, RFID) technology, a Bluetooth (Bluetooth, BT) technology (for example, a common BT technology or a Bluetooth low energy (Bluetooth low energy, BLE) technology), a near field communication (near field communication, NFC) technology, a greentooth (greentooth) technology, a wireless-fidelity (wireless-fidelity, Wi-Fi) technology, a ZigBee (ZigBee) technology, an ultra-wideband (ultra-wideband, UWB) technology, and a communication technology evolved based on the foregoing communication technologies, and a communication technology that has a same or similar function as the foregoing communication technology and that can replace each other.

### (3) Wireless mesh (mesh) network

The wireless mesh network may be referred to as a mesh network, and is a many-to-many communication network structure. The mesh network can collaborate with another network and is a dynamic and scalable network architecture. In the mesh network, any two communication devices may maintain wireless interconnection.

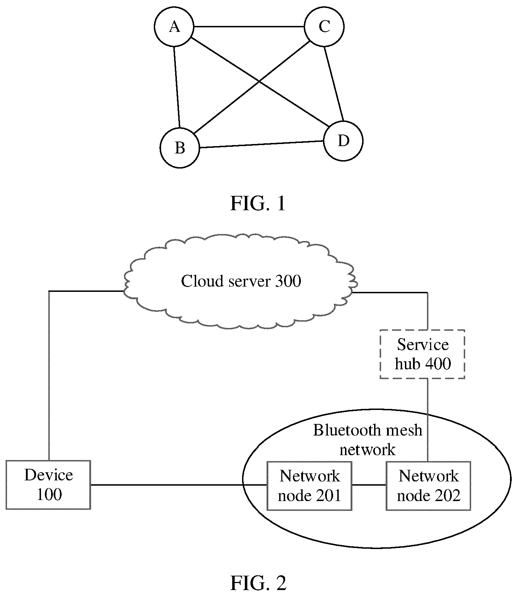

FIG. 1 is a diagram of a possible mesh network. The mesh network includes a plurality of communication devices, and each communication device may be referred to as a node (node). The mesh network may include any quantity of nodes. In FIG. 1, only a node A to a node D are used as an example. Data transmission may be performed between different nodes, and a data packet may be relayed between the nodes, so that the data packet is transmitted to a further location. In actual application, these nodes may be distributed in a manufacturing factory, an office building, a shopping center, a commercial campus, a home, and another environment.

### (4) Bluetooth mesh network

The mesh network may be combined with the short-range wireless communication technology. For example, when the mesh network is combined with the Bluetooth technology, a Bluetooth-based mesh network (referred to as a Bluetooth mesh network) may be implemented. When the Bluetooth technology is the BLE technology, the Bluetooth mesh network may also be referred to as a BLE mesh network.

The Bluetooth mesh network is a network formed by connecting a plurality of devices that support a Bluetooth communication technology. Different devices in the Bluetooth mesh network may communicate with each other by using the Bluetooth communication technology. For example, the Bluetooth mesh network may include two types of devices. One type of device is a Bluetooth mesh sub-device, and the other type of device is a Bluetooth mesh gateway. The Bluetooth mesh sub-device has a Bluetooth communication capability, but does not have a networking capability. The Bluetooth mesh gateway has both the Bluetooth communication capability and the networking capability. Therefore, the Bluetooth mesh gateway serves as a springboard for connecting the Bluetooth mesh sub-device to the Internet, to implement a remote control function. Specifically, the Bluetooth mesh sub-device cannot directly communicate with a service end (for example, a cloud server) by using the Bluetooth communication technology. Therefore, a message delivered from the service end is delivered to the Bluetooth mesh sub-device via the Bluetooth mesh gateway. The Bluetooth mesh sub-device may also report related information (for example, report a status of the Bluetooth mesh sub-device) to the service end via the Bluetooth mesh gateway.

One Bluetooth mesh gateway may be paired with one or more Bluetooth mesh sub-devices. For example, after a Bluetooth mesh sub-device 1 is successfully paired with a Bluetooth mesh gateway 1, the Bluetooth mesh sub-device 1 may communicate with the service end via the Bluetooth mesh gateway 1.

The foregoing content is name explanations related to this application. In the following, this application presents aspects, embodiments, or features around a system that may include a plurality of devices, components, modules, and the like. It should be understood that the system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the word "example" is used to present a concept in a specific manner.

For ease of understanding embodiments of this application, a communication system shown in FIG. 2 is first used as an example to describe in detail a communication system applicable to embodiments of this application. As shown in FIG. 2, the communication system may include a device 100, at least one network node 201 (only one network node 201 is shown in FIG. 2), at least one network node 202 (only one network node 202 is shown in FIG. 2), and a cloud server 300.

The device 100 may communicate with the network node 201 by using a first communication technology, and the device 100 may communicate with the cloud server 300 by using a second communication technology. Communication may be performed between different network nodes 201 in a plurality of network nodes 201, between different network nodes 202 in a plurality of network nodes 202, or between the network node 201 and the network node 202 by using a third communication technology. The network node 202 may communicate with the cloud server 300 by using a fourth communication technology.

The first communication technology, the second communication technology, the third communication technology, and the fourth communication technology may be different communication technologies, or at least two of the communication technologies are the same. This is not specifically limited. For example, the first communication technology may be an NFC technology and/or a Bluetooth communication technology, the second communication technology may be a Wi-Fi technology, a fourth generation mobile communication technology (4G), a fifth generation mobile communication technology (5G), or a communication technology proposed in a subsequent development process, the third communication technology may be a Bluetooth communication technology, and the fourth communication technology may be a Wi-Fi technology.

It may be understood that, for example, the second communication technology is the Wi-Fi technology. That the device 100 communicates with the cloud server 300 by using the Wi-Fi technology may mean that the device 100 accesses a network by using the Wi-Fi technology, and then communicates with the cloud server 300 through the network. The fourth communication technology may be understood by reference.

Optionally, the communication system further includes a service hub 400. The service hub 400 may be deployed on a router or a light host, and the service hub 400 may be used as a relay device for communication between the network node 202 and the cloud server 300.

### (1) Network node 201 and network node 202

For example, the network node 201 and the network node 202 may be network nodes in a mesh network. In this embodiment of this application, an example in which the network node 201 and the network node 202 are network nodes in a Bluetooth mesh network is used. For example, the network node 201 is a Bluetooth mesh sub-device in the Bluetooth mesh network, and the network node 202 is a Bluetooth mesh gateway (which may be referred to as a gateway for short) in the Bluetooth mesh network. A quantity of Bluetooth mesh sub-devices and a quantity of Bluetooth mesh gateways in the Bluetooth mesh network are not limited in this embodiment of this application.

The communication system may be applied to a plurality of possible scenarios. In this embodiment of this application, an example in which the communication system is applied to a smart home scenario is used. In the smart home scenario, the Bluetooth mesh sub-device may be a smart home device having a Bluetooth communication capability, and the Bluetooth mesh gateway may be a device (for example, a scenario panel) having a Bluetooth communication capability and a networking capability. This is not specifically limited. In this embodiment of this application, an example in which the smart home device does not have the networking capability is used for description. In other words, some implementations of the smart home device that does not have the networking capability are mainly studied in this embodiment of this application.

The smart home device may include an intelligent lock, a smart desk lamp, a smart fan, a smart air conditioner, a smart curtain, a smart television, a smart rice cooker, a smart button, and the like. The smart button may also be referred to as a remote control switch.

### (2) Device 100

The device 100 includes a device including a display, for example, a smartphone, a tablet computer, a vehicle-mounted device, a wearable device, or a laptop (laptop). It may be understood that, in some other possible embodiments, the device further includes a desktop computer, a central display, or the like with a display. The central display may be a smart home central display. The smart home central display is a central control system used in a home. Control functions of all indoor devices are integrated into the central control system, and the user can control the smart home device through a panel. A specific type of the device 100 is not limited in this embodiment of this application.

When the communication system shown in FIG. 2 is applied to the smart home scenario, an application used to manage the smart home device may be installed on the device 100, or the device 100 may access a web page used to manage the smart home device. The application or the web page may be developed and provided by a manufacturer of the smart home device. The device 100 may manage, based on the application or the web page used to manage the smart home device, a smart home device that has a binding relationship with the device 100.

The user of the device 100 is a user corresponding to a user account used to log in to the application or the web page on the device 100. For example, a user 1 uses a user account (for example, a Huawei account) of the user 1 to log in to the application or the web page used to manage the smart home device. In this case, the user 1 is a user of the device 100. The user account used to log in to the application or the web page that is on the device 100 and that is used to manage the smart home device may be referred to as an associated user account of the device 100. The user account is usually a unique identifier of an email address or a mobile phone number of the user, or may be named by using another account (for example, a social networking service account).

That the device 100 has a binding relationship with the smart home device means that an identifier of the smart home device is bound to or associated with the user account logged in to the device 100. The identifier of the smart home device may uniquely indicate the smart home device, for example, may be a media access control (media access control, MAC) address, a device sequence number (sequence number, SN), or another unique identifier. Only a device that has a binding relationship with the smart home device has permission to access and control the smart home device.

It may be understood that the binding relationship between the device 100 and the smart household may also be referred to as an association relationship, a subordinate relationship, or another name. This is not limited in this embodiment of this application. In addition, for the binding relationship between the device 100 and a gateway, refer to the binding relationship between the device 100 and the smart home device.

### (3) Cloud server 300

The cloud server 300 may be a device that provides a secure and reliable computing service, and can be used as a trusted medium platform to implement communication between a household internal control device and an external control device, to meet requirements for remote control, detection, and information exchange. It may be understood that the cloud server 300 may include one or more servers. For example, the cloud server 300 may be a server cluster, and different servers may be configured to provide different services.

The cloud server 300 is associated with a manufacturer or a service provider of the smart home device. In this embodiment of this application, the cloud server 300 provides an interface for the application or the web page used to manage the smart home device. The cloud server 300 may receive, through the interface, a message that is sent by the device 100 and that is used to manage the smart home device, and manage the smart home device based on the message. For example, the cloud server 300 may indicate, based on the message sent by the device 100, the smart desk lamp to be turned on/off, or adjust brightness, a color temperature, or the like.

The communication system and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems as a network architecture evolves and a new service scenario emerges.

The following describes a hardware structure of the device 100 in FIG. 2.

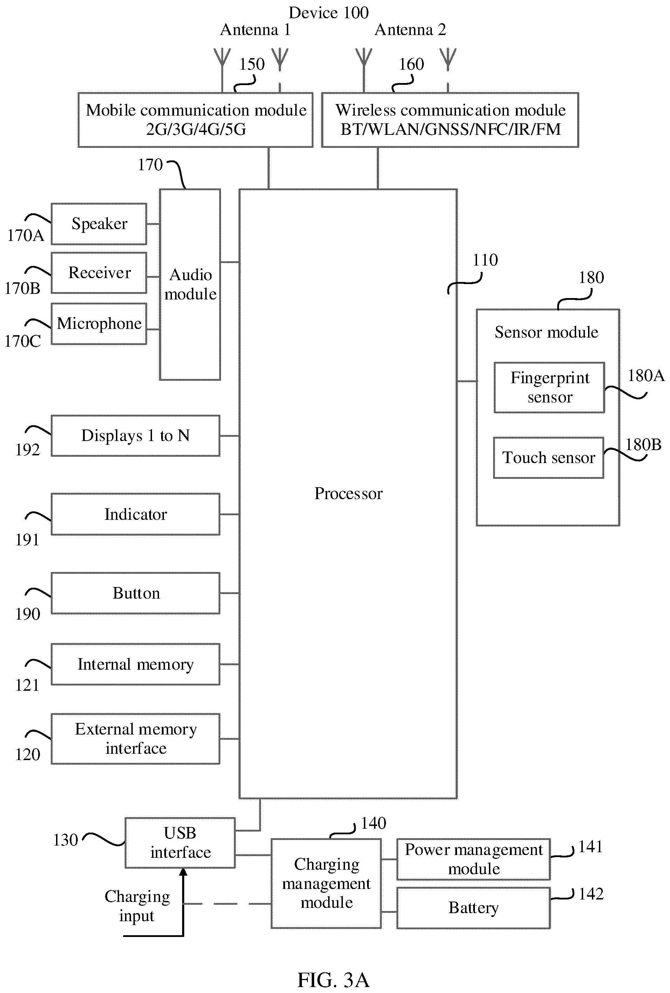

FIG. 3A is a diagram of a possible hardware structure of the device 100 according to an embodiment of this application. As shown in FIG. 3A, the device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a sensor module 180, a button 190, an indicator 191, and a display 192. The sensor module 180 may include a fingerprint sensor 180A, a touch sensor 180B, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the device 100. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may be specifically a mini USB interface, a micro USB interface, a USB type-C interface, or the like. The USB interface 130 may be configured to connect to a charger to charge the device 100, or may be configured to transmit data between the device 100 and a peripheral device. The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 192, the wireless communication module 160, and the like.

A wireless communication function of the device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal.

The mobile communication module 150 may provide a wireless communication solution that is applied to the device 100, including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same component.

The wireless communication module 160 may provide a wireless communication solution that is applied to the device 100 and that includes a wireless local area network (wireless local area network, WLAN), BT, a global navigation satellite system (global navigation satellite system, GNSS), frequency modulation (frequency modulation, FM), NFC, an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the device 100 are coupled, and the antenna 2 and the wireless communication module 160 in the device 100 are coupled, so that the device 100 can communicate with a network and another device by using a wireless communication technology.

The display 192 is configured to display a display interface of an application, and the like. The display 192 includes a display panel. In some embodiments, the device 100 may include one or N displays 192, where N is a positive integer greater than 1.

The internal memory 121 may be configured to store executable program code. The executable program code includes instructions. The processor 110 runs the instructions stored in the internal memory 121, to perform various function applications and data processing of the device 100. The internal memory 121 may include a program storage area and a data storage area. The program storage area may store an operating system, software code of at least one application (for example, a camera application), and the like. The data storage area may store data (for example, an image or a video) and the like generated in a process of using the device 100. In addition, the internal memory 121 may include a high-speed random access memory, or may include a nonvolatile memory, for example, at least one magnetic disk storage device and a flash memory.

The external memory interface 120 may be used to connect to an external storage card, for example, a micro SD card, to extend a storage capability of the device 100. The external storage card communicates with the processor 110 through the external memory interface 120, to implement a data storage function.

The device 100 may implement an audio function, for example, music playing, via the audio module 170, the speaker 170A, the receiver 170B, the microphone 170C, the application processor, and the like.

The fingerprint sensor 180A is configured to collect a fingerprint. The touch sensor 180B is also referred to as a "touch panel". The touch sensor 180B may be disposed on the display 192, and the touch sensor 180B and the display 192 form a touchscreen, which is also referred to as a "touch screen".

The button 190 includes a power button, a volume button, and the like. The indicator 191 may be an indicator light, and may be configured to indicate a charging status and a battery level change, or may be configured to indicate a notification, or the like.

It may be understood that the device 100 shown in FIG. 3A is merely an example, and the device 100 may have more or fewer components than those shown in the figure, or a combination of two or more components, or an arrangement of different components. Components shown in the figure may be implemented by hardware, software, or a combination of hardware and software that includes one or more signal processing and/or application-specific integrated circuits.

The following describes a software structure of the device 100 in embodiments of this application.

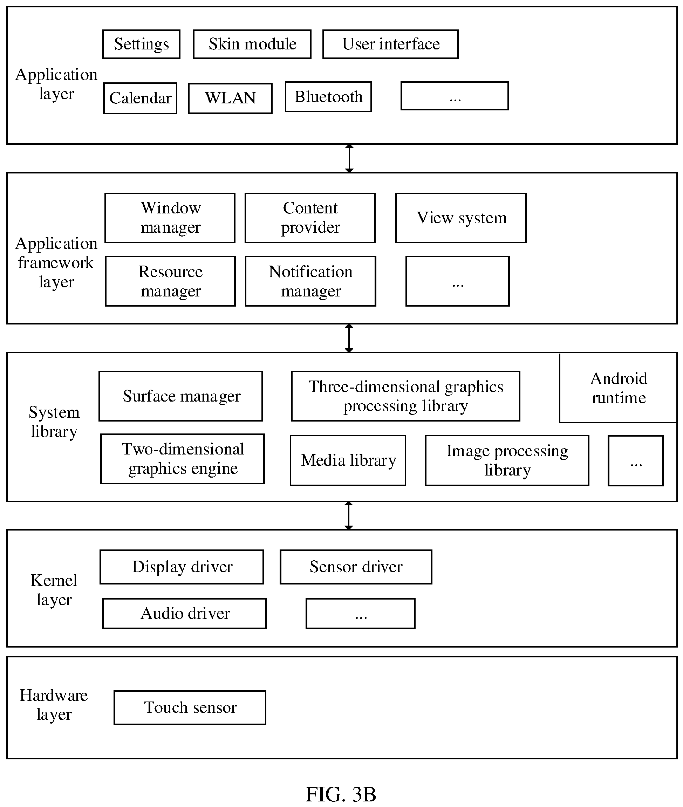

As shown in FIG. 3B, the software structure of the device 100 may be a layered architecture. For example, software may be divided into several layers, and each layer has a clear role and task. The layers communicate with each other through a software interface. In some embodiments, an Android system is divided into four layers: an application layer, an application framework (framework, FWK) layer, an Android runtime (Android runtime) and system library, and a kernel layer from top to bottom.
(1) The application layer may include a series of application packages. As shown in FIG. 3B, the application layer may include settings, a skin module, a user interface (user interface, UI), a third-party application, and the like. The third-party application may include a calendar, a WLAN, Bluetooth, and the like.
(2) The application framework layer provides an application programming interface (application programming interface, API) and a programming framework for an application at the application layer. The application framework layer may include some predefined functions. As shown in FIG. 3B, the application framework layer may include a window manager, a content provider, a view system, a resource manager, a notification manager, and the like.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, a browsing history, a bookmark, and the like. The view system includes visual controls such as a control for displaying text and a control for displaying an image. The view system may be configured to construct an application. A display interface may include one or more views. The resource manager provides various resources such as a localized character string, an icon, an image, a layout file, and a video file for an application. The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, or an indicator blinks.

(3) The Android runtime includes a core library and a virtual machine. The Android runtime is responsible for scheduling and management of the Android system.

The core library includes two parts: a function that needs to be called in Java language and a system library of Android. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, an OpenGL ES), and a two-dimensional graphics engine (for example, an SGL).

The surface manager is configured to manage a display subsystem and provide fusion of two-dimensional and three-dimensional graphics layers for a plurality of applications. The media library supports playback and recording in a plurality of commonly used audio and video formats, and static image files. The media library may support a plurality of audio and video coding formats, for example, MPEG4, H.264, and MP3. The three-dimensional graphics processing library is configured to implement three-dimensional graphics drawing, image rendering, composition, layer processing, and the like. The two-dimensional graphics engine is a drawing engine for two-dimensional drawing.

In addition, the system library may further include a backup determining module, configured to determine whether a file exists in a backup list. For example, when the file exists in the backup list, the backup determining module determines that the file does not need to be backed up. For another example, when the file does not exist in the backup list, the backup determining module determines that the file needs to be backed up.
(4) The kernel layer is a layer between hardware and software. The kernel layer includes at least a display driver, an audio driver, and a sensor driver.
(5) The hardware layer may include various types of sensors, for example, the touch sensor in embodiments of this application.

Based on the communication system shown in FIG. 2, in a smart home scenario, various smart home devices (such as a smart speaker, a smart desk lamp, a smart curtain, a smart air conditioner, and a smart refrigerator) at home may be connected together by using an internet of things technology. In this way, a plurality of functions such as audio control, lighting control, curtain control, air conditioner control, and refrigerator control can be provided. Compared with a common home device, an information exchange function is added to the smart home device, so that the smart home device can be remotely controlled.

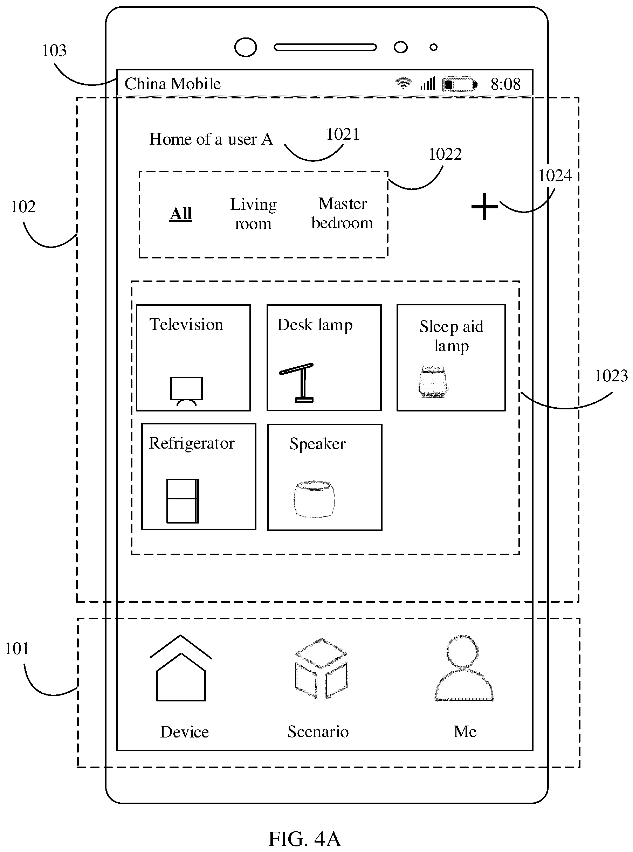

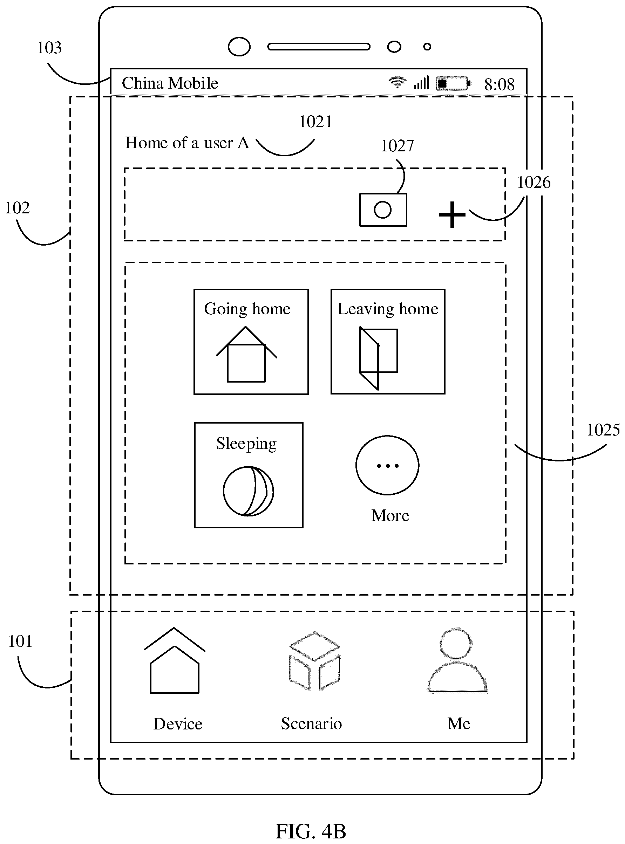

It can be learned from the foregoing description of FIG. 2 that the user may log in, by using the user account and a password of the user, to the application or the web page that is installed on the device 100 and that is used to manage the smart home device. The following briefly describes a user interface of the device 100 with reference to FIG. 4A and FIG. 4B, to facilitate understanding of human-machine interaction in the following.

FIG. 4A shows a user interface provided by the device 100 after the user logs in to an application used to manage a smart home device by using a user account and a password. As shown in FIG. 4A, the user interface may include a menu 101 and a content display area 102. In some embodiments, the user interface may further include a status bar 103. The status bar 103 may include one or more of the following: an operator name (China Mobile) Wi-Fi icon, signal strength, time, a battery icon, an alarm clock icon (not shown in the figure), a Bluetooth icon (not shown in the figure), or the like.

The menu 101 may include a plurality of controls, for example, a "Device" control, a "Scenario" control, and a "Me" control shown in FIG. 4A. Representation forms of the plurality of controls may include text (for example, "Device", "Scenario", and "Me" in the user interface 10) and/or an icon (for example, an icon in the menu 101 in the user interface).

Content displayed in the content display area 102 is related to a currently selected control in the menu 101, in other words, content displayed in the content display area 102 corresponding to different controls in the menu 101 is different. If the currently selected control is the "Device" control, content of managing a smart home device bound to the device 100 is displayed in the content display area 102. If the currently selected control is the "Scenario" control, scenario information is displayed in the content display area 102. If the currently selected control is "Me", content used to set information like the user account is displayed in the content display area 102.

The following uses Case 1 and Case 2 as examples to describe content displayed in the content display area 102.

### (1) Case 1

As shown in FIG. 4A, when the "Device" control in the menu 101 is selected, content of managing the smart home device bound to the device 100 is displayed in the content display area 102. The content display area 102 may include a user name 1021, a smart home device category list 1022, a smart home device list 1023, and a control 1024.

The user name 1021 indicates a user name corresponding to a user account that currently logs in to an application that is on the device 100 and that is used to manage the smart home device, for example, a user name "user A" shown in FIG. 4A.

The smart home device category list 1022 may include one or more category options. The category option may enable smart home devices that have a binding relationship with the user to be classified and displayed in the smart home device list 1023. As shown in FIG. 4A, the smart home device category list 1022 may include three category options: All, Living room, and Primary bedroom. The category options in the smart home device category list 1022 may be set by the user. In addition to "All", "Living room", and "Primary bedroom" included in the smart home device category list 1022, the user may further set another category option. This embodiment of this application is merely an example for description, and is not limited thereto.

Content displayed in the smart home device list 1023 is related to a currently selected option in the smart home device category list 1022, that is, content displayed in the smart home device list 1023 corresponding to different options in the smart home device category list 1022 is different. When the "All" option is selected, display information of all smart home devices that have a binding relationship with the device 100 is displayed in the smart home device list 1023. When the "Living room" option is selected, display information of a smart home device that is located in the living room and that is in all the smart home devices having a binding relationship with the device 100 is displayed in the smart home device list 1023. When the "Primary bedroom" option is selected, display information of a smart home device that is located in the primary bedroom and that is in all the smart home devices having a binding relationship with the device 100 is displayed in the smart home device list 1023.

As shown in FIG. 4A, the "All" option in the current smart home device category list 1022 is selected, and the display information of all the smart home devices that have a binding relationship with the user is displayed in the smart home device list 1023. The display information of the smart home device may include a picture and a name of the smart home device, and optionally, further include an operating status. The name of the smart home device may be set by the user, or may be a default name of the smart home device. The operating status of the smart home device may be on or off.

The display information in the smart home device list 1023 may be used to display a control page of the smart home device. The control page may be used to set an operating status and an operating parameter of the smart home device, or may be used to view an operating status, an operating parameter, and the like of the smart home device. For example, the user may tap a picture of a sound box in the display information. In response to the tap operation, the device 100 displays an interface that can be used to turn on/off the sound box and set an operating parameter of the sound box.

The control 1024 may be used to add a device, and the control 1024 may be used to receive an input user operation (for example, a tap operation). In response to the user operation, the device 100 may display, in the user interface 10, a window used to add a device.

### (2) Case 2

As shown in FIG. 4B, when the "Scenario" control in the menu 101 is selected, scenario information is displayed in the content display area 102. The content display area 102 may include a user name 1021, a scenario list 1025, and a control 1026. Optionally, the content display area 102 may further include a smart button (button) 1027.

The scenario list 1025 includes one or more scenario icons and names. For example, FIG. 4B shows three scenarios: going home, leaving home, and sleeping. The user may preset a smart home device enabled in each scenario and an operating parameter of the smart home device. For example, the user may set an operating status of a smart speaker to off in the "Leaving home" scenario, and set the operating status of the smart speaker to on and a volume to 20 in the "Going home" scenario. After the setting is completed, the user may tap the scenario icon in the scenario list 1025, to enable one or more smart home devices in a scenario corresponding to the scenario icon, and indicate the smart home device to operate at a preset operating parameter. Different smart home devices correspond to different operating parameters. For example, an operating parameter of the smart desk lamp may include a color and brightness, and an operating parameter of the smart speaker may include a volume. The scenario list 1025 may further include a "More" icon. The user may tap the "More" icon. In response to the tap operation, the device 100 may display interfaces of more scenarios.

The control 1026 may be used to add a scenario, and the control 1026 may be used to receive an input user operation (for example, a tap operation). In response to the user operation, the device 100 may display, in the user interface, a window used to add a scenario.

The smart button 1027 may be configured to write a scenario into the smart button or view a scenario that has been written into the smart button. For details, refer to descriptions in Embodiment 2.

It may be understood that, not limited to FIG. 4A and FIG. 4B, after the user logs in to the application used to manage the smart home device by using the user account and the password, a page layout of the user interface provided by the device 100 may alternatively be presented in another form. This is not limited in this embodiment of this application.

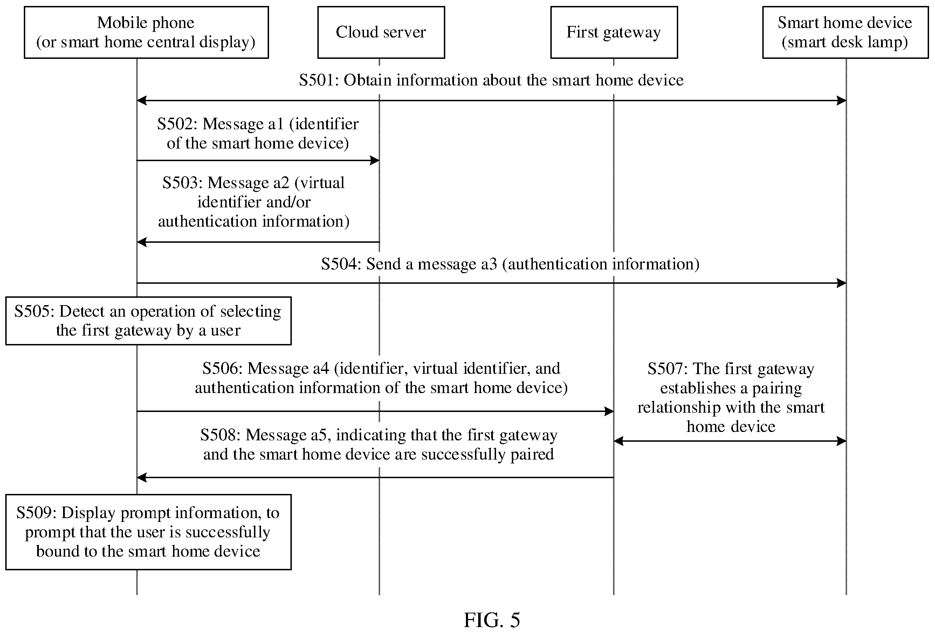

As described in the background, because the smart home device usually does not have a network connection capability, the smart home device needs to be first paired with the gateway. The following describes a possible implementation based on the communication system shown in FIG. 2 and with reference to FIG. 5. The following uses an example in which the device 100 in FIG. 2 is a mobile phone for description.

FIG. 5 is a schematic flowchart of pairing between a smart home device and a gateway. In this procedure, an example in which the smart home device is a smart desk lamp (which may also be referred to as a desk lamp for short) is used for description. As shown in FIG. 5, the procedure may include the following steps.

S501: The mobile phone obtains information about the smart home device.

For example, the information about the smart home device may include an identifier of the smart home device, and optionally, further include type information, status information, and the like of the smart home device. For the identifier of the smart home device, refer to the foregoing descriptions. The type information of the smart home device indicates a type of the smart home device. The type of the smart home device may be a type classified based on a function of a functional home device, for example, a refrigerator or a desk lamp. The status information of the smart home device indicates whether the smart home device is in a to-be-bound state or whether the smart home device is bound to another mobile phone.

The mobile phone may obtain the information about the smart home device in a plurality of manners. In a possible implementation, the mobile phone may communicate with the smart home device, and then the smart home device may send the information about the smart home device to the mobile phone. The mobile phone communicates with the smart home device in a plurality of manners. For example, the user may hold the mobile phone to perform on-tap with the smart home device, for example, use an NFC area on the mobile phone for one-tap with an NFC area on the smart home device. In this way, the mobile phone can communicate with the smart home device by using an NFC technology. For example, the mobile phone may send request information to the smart home device by using the NFC technology. Correspondingly, after receiving the request information, the smart home device may send response information to the smart home device. The response information may include the information about the smart home device.

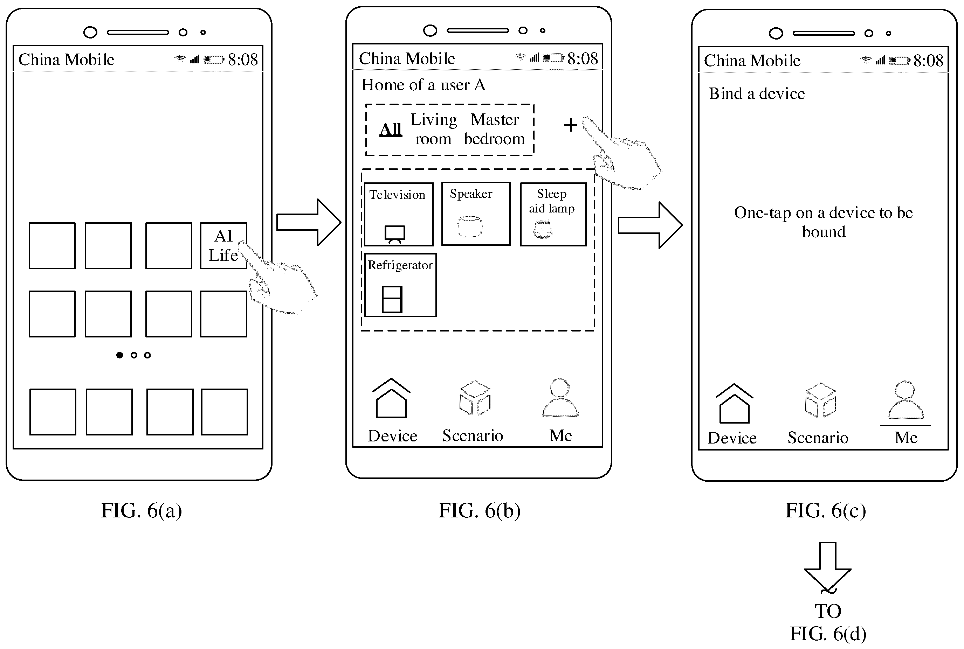

For example, a display of the mobile phone displays a home screen, and the home screen includes icons of applications (for example, an icon of an AI Life application), as shown in FIG. 6(a). The mobile phone detects an operation performed by the user on the display by using a touch sensor disposed on the display. If an operation 1 is detected and the operation 1 may be an operation of tapping an application icon of AI Life on the home screen, an interface shown in FIG. 6(b) may be displayed. Further, if an operation 2 is detected and the operation 2 may be tapping an icon "+" in the interface shown in FIG. 6(b), an interface shown in FIG. 6(c) may be displayed. Further, when the user holds the mobile phone to perform on-tap with the smart home device, the mobile phone may communicate with the smart home device by using the NFC technology.

The foregoing manner is an example of communication between the mobile phone and the smart home device. In addition to the foregoing manner, the mobile phone may communicate with the smart home device in another manner. A specific manner is not limited.

It may be understood that the identifier and the device type information of the smart home device are usually constant information. Therefore, before the smart home device is delivered from a factory, the foregoing information may be prestored in the smart home device. When the smart home device communicates with the mobile phone, the smart home device may send the identifier and the device type information of the smart home device to the mobile phone. However, the status information of the smart home device is not constant information. Therefore, the status information of the smart home device may be stored in the smart home device, or may be stored in a cloud server. In other words, the status information of the smart home device may be obtained by the mobile phone from the smart home device, or may be obtained by the mobile phone from the cloud server.

S502: The mobile phone sends a message a1 to the cloud server, where the message a1 includes the identifier of the smart home device, and the message a1 is used to request to register the smart home device.

S503: The cloud server sends a message a2 to the mobile phone, where the message a2 includes a virtual identifier and/or authentication information of the smart home device.

For example, the virtual identifier is associated with the identifier of the smart home device. The virtual identifier may be a string of characters, digits, or the like randomly generated by the cloud server to uniquely identify the smart home device. Because communication between the smart home device and the cloud server is a long link, there is a high probability of being attacked. Therefore, the virtual identifier is allocated, so that when the smart home device subsequently communicates with the cloud server, the virtual identifier of the smart home device may be carried, and the identifier of the smart home device does not need to be carried. This effectively improves security.

The authentication information may be encryption/decryption information. For example, the authentication information includes a key encryption algorithm and a key decryption algorithm. In this case, when the smart home device communicates with a first gateway (referring to the following), the smart home device and the first gateway may separately calculate a key. For example, the first device and the cloud use a same key encryption algorithm to calculate an encryption key, and use a same key decryption algorithm for decryption.

Optionally, the message a2 may further include other possible information. This is not limited in this embodiment of this application.

S504: The mobile phone sends a message a3 to the smart home device, where the message a3 includes the authentication information of the smart home device.

For example, the mobile phone may send the message a3 to the smart home device in a plurality of manners. For example, the mobile phone may send the message a3 to the smart home device by using the NFC technology or a Bluetooth communication technology.

S505: The mobile phone detects an operation of selecting the first gateway by the user.

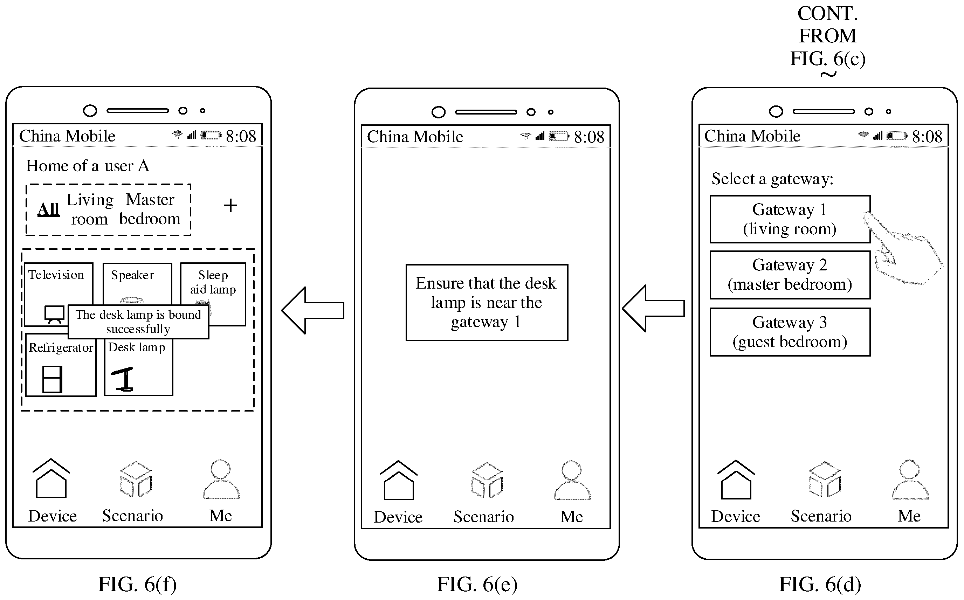

The foregoing example is still used. After the mobile phone receives the message a2 from the cloud server (not limited to this sequence relationship), the mobile phone may display an interface shown in FIG. 6(d). The interface may include an icon of at least one gateway bound to the mobile phone. If an operation 3 is detected and the operation 3 may be tapping an icon of an interface gateway 1 (namely, the first gateway) shown in FIG. 6(d), an interface shown in FIG. 6(e) may be displayed. To be specific, the user is prompted to move the desk lamp close to the first gateway, so that the desk lamp is paired with the first gateway.

S506: The mobile phone sends a message a4 to the first gateway, where the message a4 includes the identifier of the smart home device.

Herein, the message a4 may further include the virtual identifier and/or the authentication information that are/is of the smart home device and that are/is sent by the first gateway.

S507: The first gateway establishes a pairing relationship with the smart home device.

For example, when a communication distance between the first network element and the smart home device falls within a corresponding communication distance range (for example, a Bluetooth communication range), the first gateway may discover the smart home device, and obtain the identifier of the smart home device. If the identifier of the smart home device is the same as an identifier of a smart home device received from the mobile phone, it is determined that the smart home device is a smart home device that needs to be paired. Then, the first gateway establishes a pairing relationship with the smart home device. Subsequently, the first gateway may communicate with the smart home device based on the authentication information.

It may be understood that the pairing relationship between the gateway and the smart home device may also be referred to as an association relationship or another name. This is not specifically limited.

S508: The first gateway sends a message a5 to the mobile phone, where the message a5 indicates that the first gateway and the smart home device are successfully paired.

S509: After receiving the message a5, the mobile phone displays prompt information, where the prompt information is used to prompt that the user is successfully bound to the smart home device. Refer to an interface shown in FIG. 6(f).

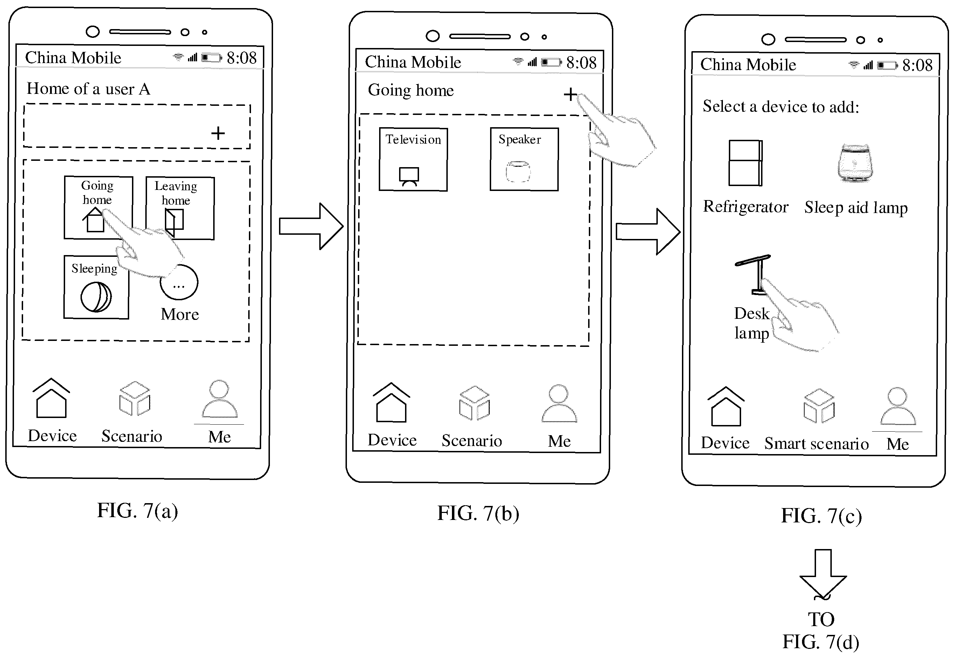

Further, after the user is successfully bound to the smart home device, the user may manage the smart home device by using the mobile phone, for example, add the smart home device to a specific scenario. It can be learned from the description in Case 2 that, when the "Scenario" control in the menu 101 is selected, the scenario information is displayed in the content display area 102. If the mobile phone detects an operation 4 of the user and the operation 4 may be tapping the going home scenario in the interface shown in FIG. 7(a), an interface shown in FIG. 7(b) may be displayed. The interface shown in FIG. 7(b) may include a picture and a name of a smart home device that has been added to the going home scenario. For example, the smart home device that has been added to the going home scenario includes a television and a speaker.

If the mobile phone detects an operation 5 of the user and the operation 5 may be tapping an icon "+" in the interface shown in FIG. 7(b), an interface shown in FIG. 7(c) may be displayed. The interface shown in FIG. 7(c) may include pictures and names of one or more to-be-added smart home devices. These to-be-added smart home devices are smart home devices that have a binding relationship with the mobile phone and that are not added to the going home scenario.

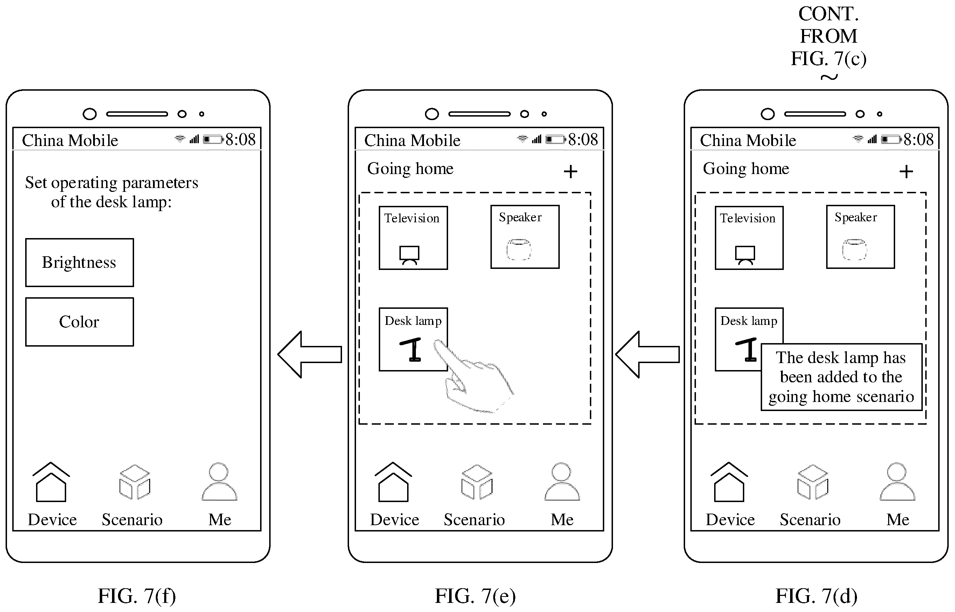

If the mobile phone detects an operation 6 of the user and the operation 6 may be tapping a desk lamp icon in the interface shown in FIG. 7(c), the mobile phone may add the desk lamp to the going home scenario, and display prompt information. The prompt information may be "The desk lamp has been added to the going home scenario" displayed in the interface, as shown in FIG. 7(d).

After the mobile phone adds the desk lamp to the going home scenario, if the mobile phone detects an operation 7 of the user and the operation 7 may be tapping a desk lamp icon in an interface shown in FIG. 7(e), an interface shown in FIG. 7(f) may be displayed. The interface shown in FIG. 7(f) may include controls for setting operating parameters of the desk lamp, so that the user can set the operating parameters of the desk lamp in the going home scenario by using these controls.

According to the related descriptions in FIG. 5, FIG. 6(a) to FIG. 6(f), and FIG. 7(a) to FIG. 7(f), it can be learned that the foregoing method has the following problems.

Problem 1: In the foregoing method, the user needs to manually select a to-be-paired gateway on the mobile phone. However, because the user cannot accurately know a gateway with best signal quality between the gateway and the smart home device, the user selects a gateway based on only a location of the smart home device. Therefore, the gateway selected by the user may not be the gateway with the best signal quality between the gateway and the smart home device, resulting in poor communication quality.

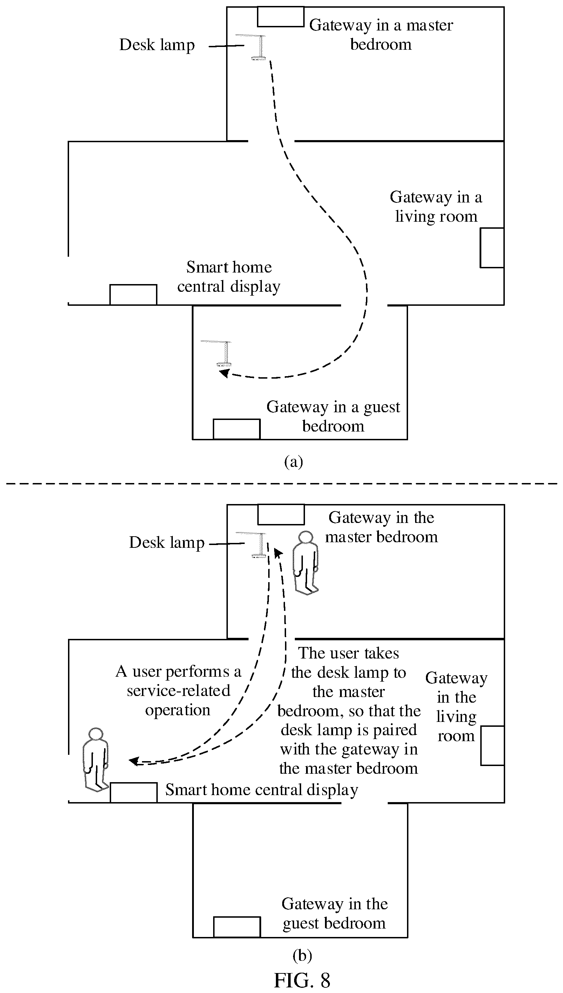

Problem 2: After the user selects a to-be-paired gateway on the mobile phone, the mobile phone sends information like the identifier of the smart home device to the gateway. Subsequently, the gateway may be paired with the smart home device. For example, the user intends to use the smart home device in the primary bedroom. Therefore, the user may select, on the mobile phone, a to-be-paired gateway as a gateway (namely, the first gateway) of the primary bedroom, and then the first gateway may be paired with the smart home device. Subsequently, if the user moves the smart home device from the primary bedroom to a secondary bedroom, and wants to use the smart home device in the secondary bedroom, as shown in (a) in FIG. 8, because a distance between the smart home device and the gateway of the primary bedroom is long, signal quality is poor. Therefore, the foregoing procedure (to be specific, the user selects a gateway in the secondary bedroom, and the mobile phone sends the information like the identifier of the smart household to the gateway in the secondary bedroom, to pair the smart home device with the gateway in the secondary bedroom) needs to be performed again. This is difficult to implement.

Problem 3: The user can perform a service-related operation (for example, adding the smart home device to a scenario) only after the smart home device is bound to the mobile phone. If the device 100 is a smart home central display, the smart home central display is usually disposed at a home door of a living room. In the foregoing manner, the user needs to first perform one-tap between the smart home device and the smart home central display. In this way, the smart home central display obtains the identifier of the smart home device, and then the user moves the smart home device close to a to-be-paired gateway (if the to-be-paired gateway is located in the primary bedroom, the user needs to walk to the primary bedroom with the smart home device). In this way, the smart home device is paired with the gateway. After the smart home device is successfully paired with the gateway, the user needs to return to the home door of the living room, to perform a service-related operation on the smart household central display, as shown in (b) in FIG. 8. In this way, the user needs to run back and forth, resulting in poor experience.

Based on this, an embodiment of this application provides a smart home device management method, to resolve the foregoing problems.

The following describes in detail the smart home device management method provided in embodiments of this application with reference to specific embodiments (for example, Embodiment 1 to Embodiment 3). In the specific embodiments, an example in which the method provided in embodiments of this application is applied to the communication system shown in FIG. 2 is used. In addition, the method provided in this embodiment of this application may be performed by a plurality of devices. The plurality of devices include, for example, a first device, a second device, a third device, at least one gateway, and a smart home device. The first device may be a mobile phone or a smart home central display. The second device and the third device may be a same device (for example, a cloud server), or the second device and the third device may be different devices (for example, the second device is a service hub, and the third device is a cloud server). For ease of description, Embodiment 1 to Embodiment 3 are described by using an example in which the first device is a mobile phone, and the second device and the third device are a same device (that is, the cloud server).

### Embodiment 1

In Embodiment 1, a possible implementation is described by using an example in which the smart home device is a smart desk lamp.

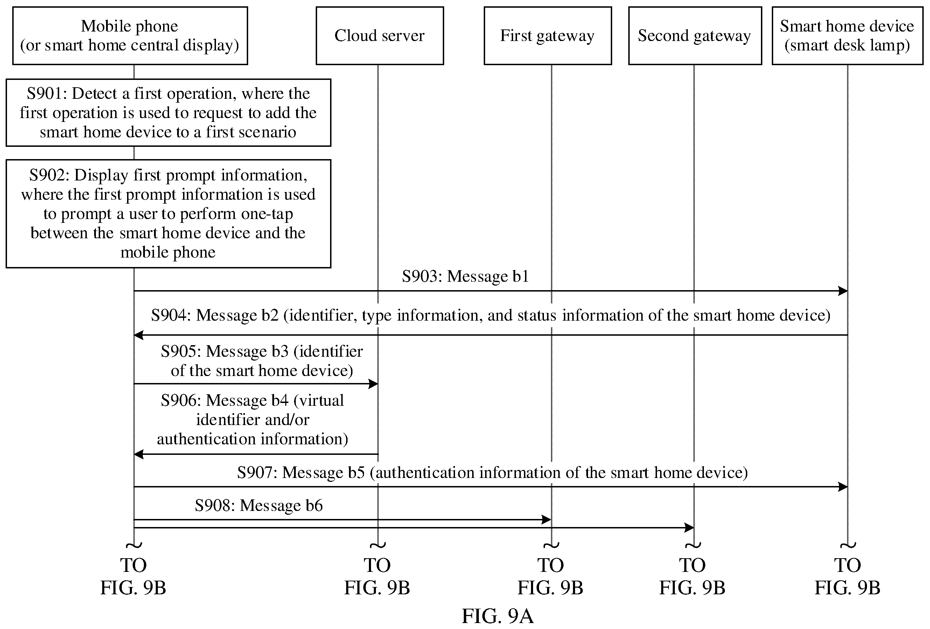

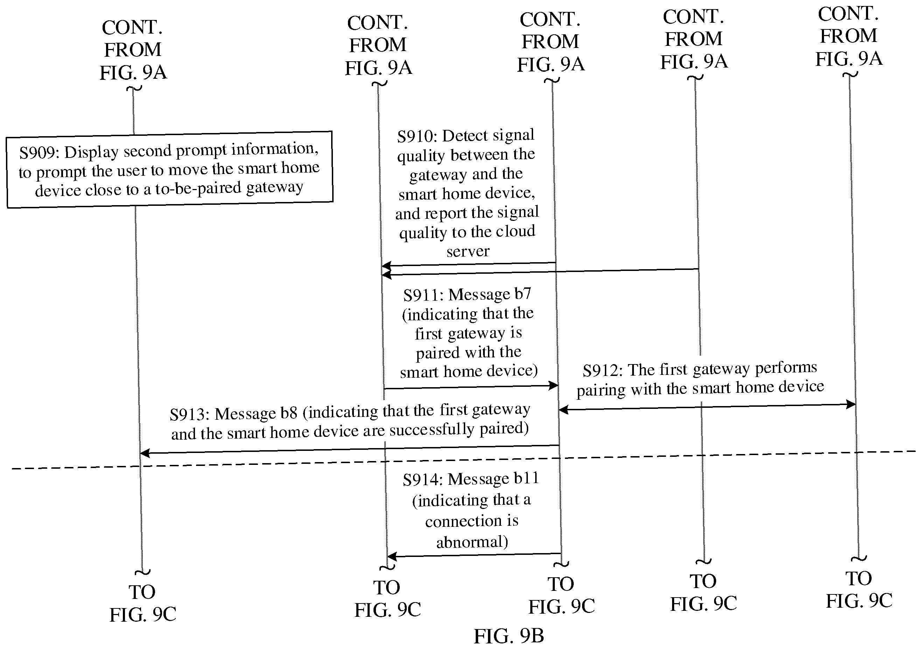

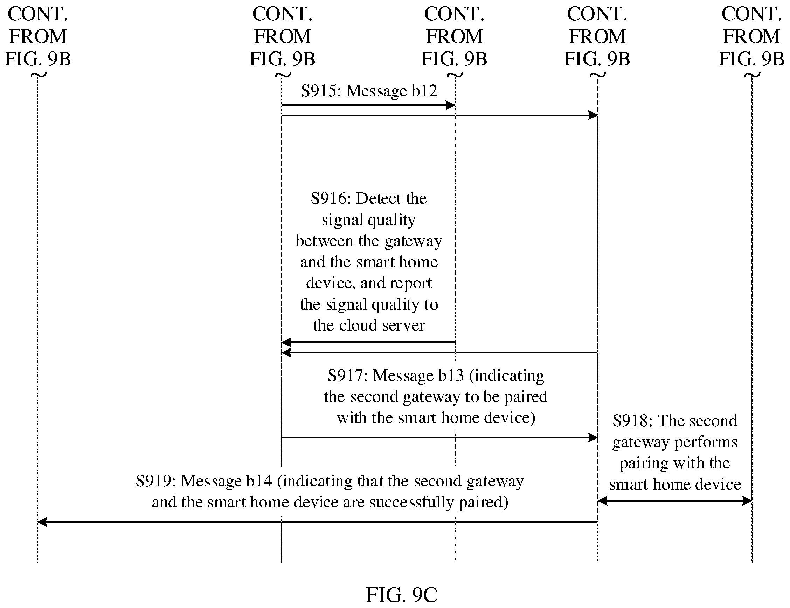

FIG. 9A to FIG. 9C are a schematic flowchart corresponding to a method according to Embodiment 1 of this application. As shown in FIG. 9A to FIG. 9C, the method may include the following steps.

S901: A mobile phone detects a first operation, where the first operation is used to request to add a smart home device to a first scenario.

S902: The mobile phone displays first prompt information in response to the first operation, where the first prompt information is used to prompt a user to perform on-tap between the smart home device and the mobile phone.

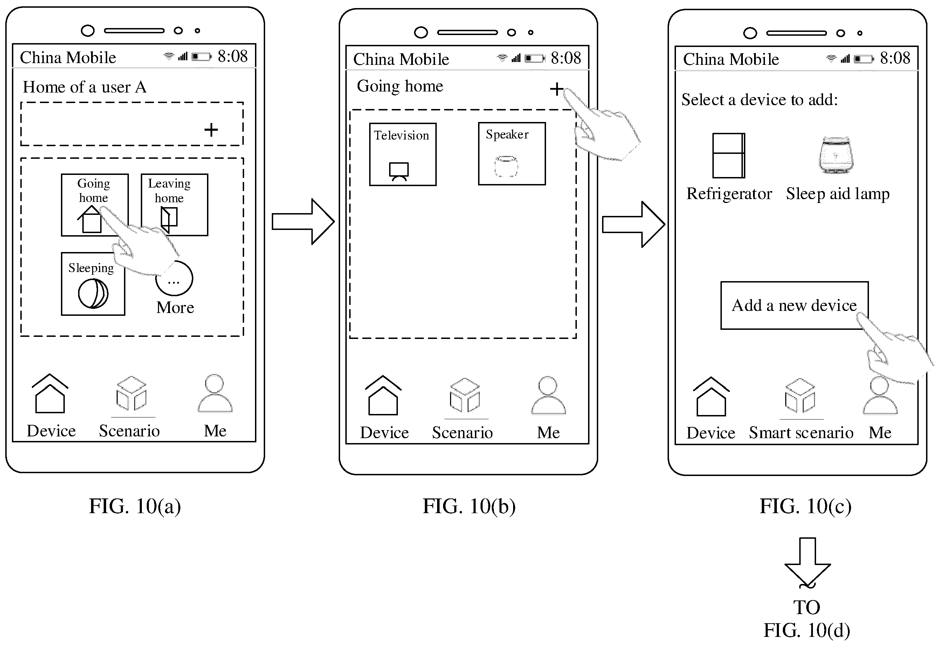

For example, as described above, the user may log in, by using a user account and a password of the user, to an application or a web page that is installed on the mobile phone and that is used to manage the smart home device. For example, an interface displayed on the mobile phone is shown in FIG. 10(a), to be specific, when a "Scenario" control in a menu is selected, scenario information of the user is displayed in a content display area.

Further, if the mobile phone detects an operation 1 and the operation 1 is tapping a going home scenario (for example, the first scenario is the going home scenario) in the interface shown in FIG. 10(a), the mobile phone may display an interface shown in FIG. 10(b). The interface shown in FIG. 10(b) may include a picture and a name of a smart home device that has been added to the going home scenario. For example, the smart home device that has been added to the going home scenario includes a television and a speaker.

If the mobile phone detects an operation 2 of the user and the operation 2 may be tapping an icon "+" in the interface shown in FIG. 10(b), an interface shown in FIG. 10(c) may be displayed. The interface shown in FIG. 10(c) may include pictures and names of one or more to-be-added smart home devices. These to-be-added smart home devices are smart home devices that have a binding relationship with the user of the mobile phone and that are not added to the going home scenario. In addition, the interface shown in FIG. 10(c) may include an "Add a new device" control. The "new device" herein may be a smart home device that has not been bound to the mobile phone.

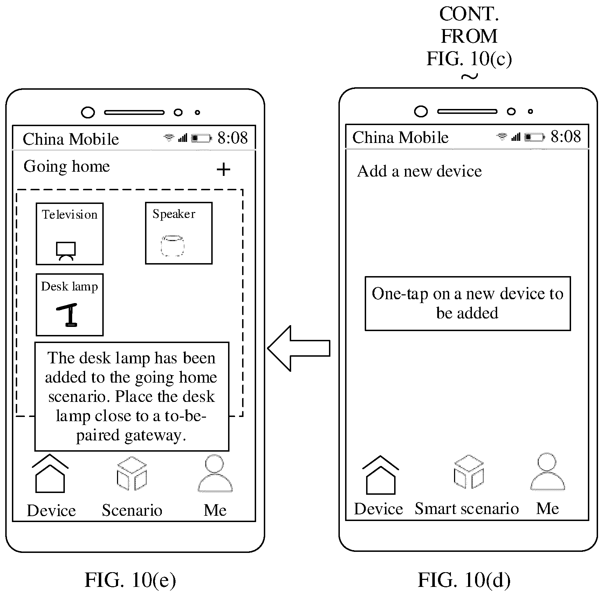

If the mobile phone detects an operation 3 of the user (the first operation may be the operation 3 herein) and the operation 3 may be tapping the "Add a new device" control in the interface shown in FIG. 10(c), the mobile phone may display the first prompt information. The first prompt information is used to prompt the user to perform on-tap between the smart home device and the mobile phone. For example, as shown in FIG. 10(d), the mobile phone may display the first prompt information in the interface. The first prompt information may be a piece of text, that is, "One-tap on a new device to be added".

S903: When detecting that the smart home device approaches the mobile phone, the mobile phone sends a message b1 to the smart home device, where the message b1 is used to request an identifier of the smart home device.

For example, if the user performs one-tap between the smart home device and the mobile phone based on the first prompt information, the mobile phone may detect that the smart home device approaches the mobile phone, and send the message b1 to the smart home device by using an NFC technology.

S904: After receiving the message b1, the smart home device sends a message b2 to the mobile phone, where the message b2 includes the identifier of the smart home device.

For example, the message b2 may further include other possible information. For example, the message b2 further includes one or more of the following: (1) type information of the smart home device, where the type information indicates a type of the smart home device; (2) status information of the smart home device, where the status information indicates that the smart home device is in a to-be-bound state, or the status information indicates that the smart home device is not bound to another mobile phone.

It may be understood that, if the status information of the smart home device indicates that the smart home device is in a bound state (that is, the smart home device is bound to another mobile phone), the mobile phone may no longer perform a subsequent operation.

S905: The mobile phone sends a message b3 to a cloud server, where the message b3 includes the identifier of the smart home device.

S906: After receiving the message b3, the cloud server sends a message b4 to the mobile phone, where the message b4 includes a virtual identifier and/or authentication information of the smart home device.

Herein, for the virtual identifier and/or the authentication information of the smart home device, refer to the foregoing descriptions. Details are not described again.

S907: The mobile phone sends a message b5 to the smart home device, where the message b5 includes the authentication information of the smart home device.

Herein, for an implementation in which the mobile phone sends the message b5 to the smart home device, refer to S504. Details are not described again.

S908: The mobile phone sends a message b6 to at least one gateway bound to the mobile phone, where the message b6 includes the identifier of the smart home device, and the message b4 indicates the at least one gateway to detect signal quality between the at least one gateway and the smart home device and report the signal quality to the cloud server when the smart home device is in a to-be-paired state; and correspondingly, the at least one gateway receives the message b6, and marks the smart home device as a to-be-paired device.

Herein, the mobile phone sends the message b6 to the at least one gateway to notify the at least one gateway that the smart home device is the to-be-paired device. Optionally, the message b6 further includes other possible information, for example, further includes the virtual identifier and/or the authentication information of the smart home device.

For example, the mobile phone may be bound to at least one gateway, and the at least one gateway may be located at different locations at home. For example, the at least one gateway may include a gateway in a living room, a gateway in a primary bedroom, and a gateway in a secondary bedroom. In FIG. 9A to FIG. 9C, an example in which the at least one gateway includes a first gateway and a second gateway is used for illustration.

That the mobile phone sends the message b6 to the at least one gateway means that the mobile phone sends the message b6 to each of the at least one gateway. In other words, the mobile phone may uniformly send information like the identifier of the smart home device to all the gateways bound to the mobile phone. The mobile phone may send the message b6 to the at least one gateway in a plurality of manners. For example, the mobile phone sends the message b6 to the at least one gateway by using a Bluetooth communication technology. This is not limited in this embodiment of this application.

S909: The mobile phone adds the smart home device to the first scenario, and displays second prompt information, where the second prompt information is used to prompt the user to move the smart home device close to a to-be-paired gateway.

The foregoing example is still used. Refer to FIG. 10(e). The mobile phone may display the second prompt information in the interface. The second prompt information may be a piece of text, that is, "The desk lamp has been added to the going home scenario. Place the desk lamp close to the to-be-paired gateway". In addition, the interface shown in FIG. 10(e) may include a picture and a name of a smart home device that has been added to the going home scenario. For example, the smart home device that has been added to the going home scenario includes a television, a speaker, and a desk lamp.

Optionally, after the mobile phone adds the smart home device to the first scenario, the user may set an operating parameter of the desk lamp through a corresponding operation. For details, refer to the foregoing descriptions. Details are not described again.

S910: The at least one gateway detects the signal quality between the at least one gateway and the smart home device, and reports the signal quality to the cloud server.

For example, if the user moves the smart home device close to the to-be-paired gateway based on the second prompt information, and performs a corresponding operation on the smart home device (for example, pressing and holding a power button of the smart home device), so that after the smart home device enters the to-be-paired state, the at least one gateway may obtain the smart home device through scanning (for example, obtain the smart home device through scanning by using the Bluetooth communication technology), and obtain the identifier of the smart home device.

Further, the first gateway in the at least one gateway is used as an example. After determining, based on the identifier of the smart home device, that the smart home device is the to-be-paired device, the first gateway detects signal quality between the first gateway and the smart home device, and reports the signal quality to the cloud server. For example, information reported by the first gateway to the cloud server may include an identifier of the first gateway, the virtual identifier of the smart home device, and the signal quality between the first gateway and the smart home device. The identifier of the first gateway may be information used to identify the first gateway. This is not specifically limited. For another gateway in the at least one gateway, refer to the implementation of the first gateway. Details are not described again.

S911: The cloud server sends a message b7 to the first gateway based on the signal quality reported by the at least one gateway, where the message b7 indicates the first gateway to be paired with the smart home device.

For example, the cloud server may select, based on the signal quality reported by the at least one gateway, a gateway with best signal quality, for example, select the first gateway, that is, the signal quality between the first gateway and the smart home device is greater than or equal to signal quality between another gateway in the at least one gateway and the smart home device.

Optionally, after sending the message b7 to the first gateway, the cloud server may store a pairing relationship between the first gateway and the smart home device, that is, store a pairing relationship between the identifier of the first gateway and the virtual identifier of the smart home device.

S912: After receiving the message b7, the first gateway performs pairing with the smart home device based on the message b7.

S913: The first gateway sends a message b8 to the mobile phone, where the message b8 indicates that the first gateway and the smart home device are successfully paired.

In this way, after receiving the message b8, the mobile phone may determine that the smart home device is successfully bound to the mobile phone. For a subsequent implementation, refer to the conventional technology. For example, in a possible implementation, if the mobile phone detects an operation of requesting to enable the going home scenario, the mobile phone may send, to the cloud server, a message b9 for enabling the going home scenario. Correspondingly, after receiving the message b9 for enabling the going home scenario, the cloud server may control a device in the going home scenario to operate based on a corresponding operating parameter. Specifically, the desk lamp in the going home scenario is used as an example. After receiving the message b9 for enabling the going home scenario, the cloud server may determine, based on a virtual identifier of the desk lamp, the first gateway paired with the desk lamp, and send a message b10 to the first gateway. The message b10 may include the virtual identifier and an operating parameter of the desk lamp. Correspondingly, after receiving the message b10, the first gateway may communicate with the desk lamp based on authentication information of the desk lamp, so that the desk lamp operates based on the operating parameter included in the message b10.

In addition, after the smart home device is paired with the first gateway, if the user changes a location of the smart home device, for example, the smart home device is previously located in the primary bedroom and is paired with the gateway (namely, the first gateway) in the primary bedroom, and then the user moves the smart home device from the primary bedroom to the secondary bedroom, the method further includes the following steps.

S914: The first gateway sends a message b11 to the cloud server, where the message b11 indicates that a connection between the smart home device and the first gateway is abnormal.

For example, after the user moves the smart home device from the primary bedroom to the secondary bedroom, a distance between the gateway (that is, the first gateway) of the primary bedroom and the smart home device is long. Therefore, when detecting that the signal quality between the first gateway and the smart home device is poor, or the first gateway is disconnected from the smart home device, the first gateway may send the message b11 to the cloud server.

S915: After receiving the message b11, the cloud server sends a message b12 to the at least one gateway, where the message b12 indicates the at least one gateway to detect the signal quality between the at least one gateway and the smart home device and report the signal quality when the smart home device is in the to-be-paired state; and correspondingly, the at least one gateway receives the message b12, and marks the smart home device as the to-be-paired device.

Herein, the mobile phone sends the message b12 to the at least one gateway to notify the at least one gateway that the smart home device is the to-be-paired device. The message b12 may include the identifier or the virtual identifier of the smart home device. In addition, the message b12 is different from the message b6. The message b6 may include the authentication information of the smart home device. Because the at least one gateway has obtained the authentication information of the smart home device based on the message b6, the message b12 may not include the authentication information of the smart home device. This reduces transmission resource overheads.

Optionally, after receiving the message b11, the cloud server may further notify the mobile phone that the connection between the smart home device and the first gateway is abnormal.

S916: The at least one gateway detects the signal quality between the at least one gateway and the smart home device, and reports the signal quality to the cloud server.

For example, after the user moves the smart home device from the primary bedroom to the secondary bedroom, the user may perform a corresponding operation (for example, pressing and holding the power button of the smart home device) on the smart home device, so that the smart home device enters the to-be-paired state, and the at least one gateway may detect the smart home device. For details, refer to the description in S909.

S917: The cloud server sends a message b13 to the second gateway based on the signal quality reported by the at least one gateway, where the message b13 indicates the second gateway to perform pairing with the smart home device.

For example, the second gateway is the gateway in the secondary bedroom.

S918: After receiving the message b13, the second gateway performs pairing with the smart home device.

S919: The second gateway sends a message b14 to the mobile phone, where the message b14 indicates that the second gateway and the smart home device are successfully paired.

According to the method in this embodiment of this application, because the mobile phone sends the message b6 to all the gateways bound to the mobile phone, the cloud server may select, based on signal quality between different gateways and the smart home device, a gateway with best signal quality between the gateway and the smart home device to be paired with the smart home device, to effectively ensure communication quality, and avoid a problem that a gateway manually selected by the user does not match actual signal quality.

In addition, after the location of the smart home device changes, the user only needs to trigger the smart home device to enter the to-be-paired state, so that the smart home device can be paired with the gateway with the best signal quality at the current location. This conveniently and quickly replaces a gateway, implements seamless roaming among the plurality of gateways, and improves user experience.

In addition, when the smart home device is not bound to the mobile phone or the smart home device is not paired with the gateway, the user may perform service processing (for example, add the smart home device to a corresponding scenario), to ensure experience continuity. This helps avoid the foregoing problem that the user needs to run back and forth.

### Embodiment 2

In Embodiment 2, a possible implementation is described by using an example in which the smart home device is a smart button.

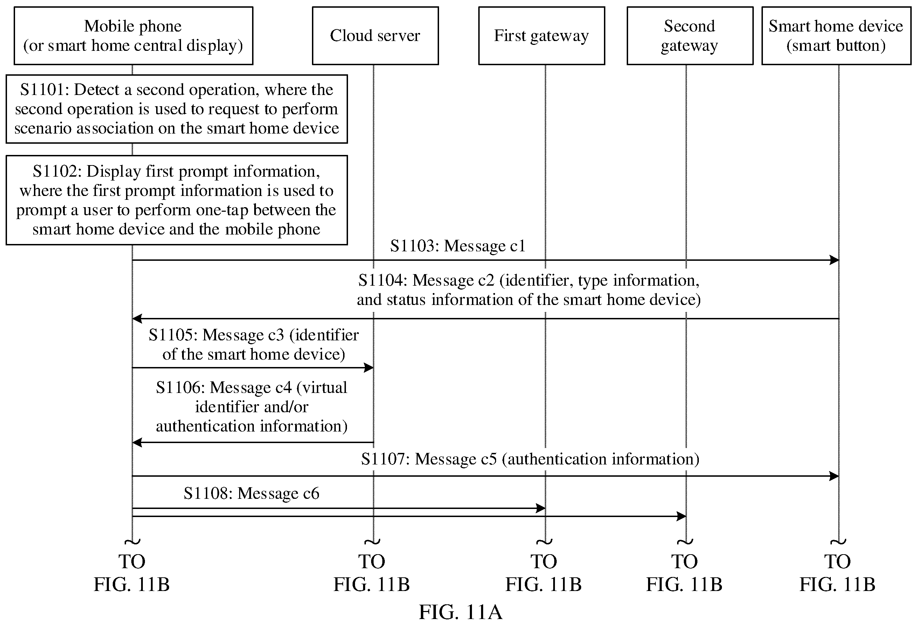

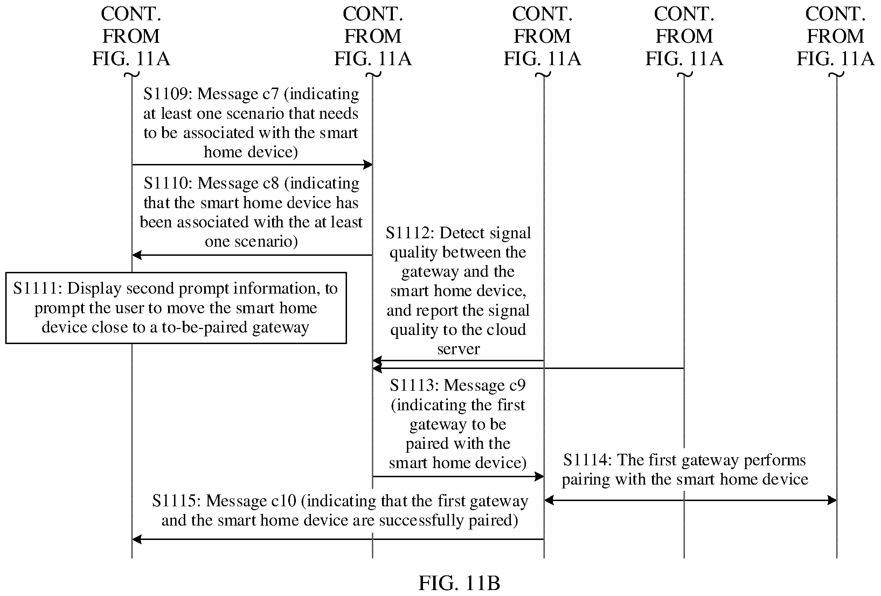

FIG. 11A and FIG. 11B are a schematic flowchart corresponding to a method according to Embodiment 2 of this application. As shown in FIG. 11A and FIG. 11B, the method may include the following steps.

S1101: A mobile phone detects a second operation, where the second operation is used to request to associate the smart home device with at least one scenario.

S1102: The mobile phone displays first prompt information in response to the second operation, where the first prompt information is used to prompt the user to perform on-tap between the smart home device and the mobile phone.

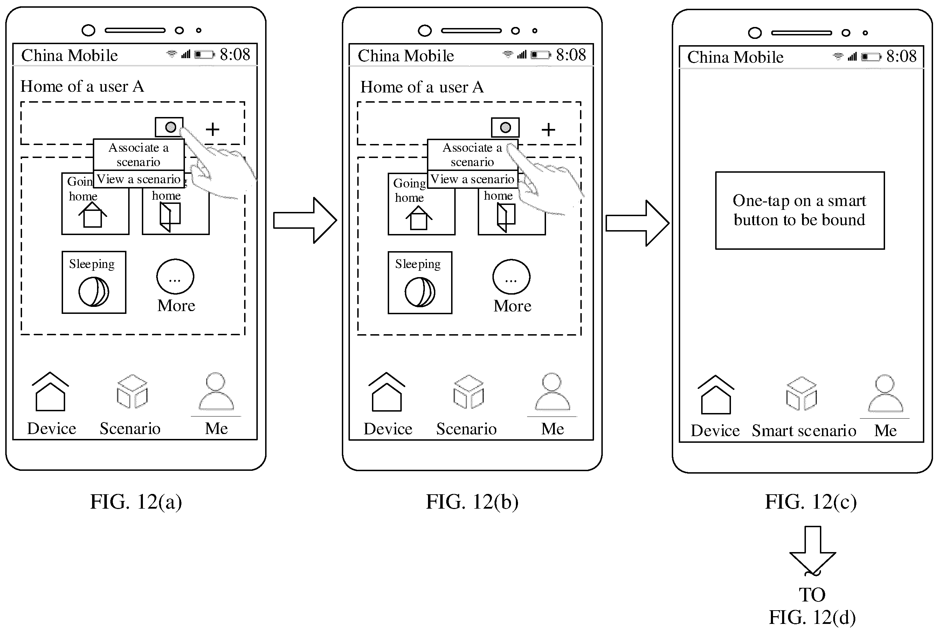

For example, as described above, the user may log in, by using a user account and a password of the user, to an application or a web page that is installed on the mobile phone and that is used to manage the smart home device. For example, an interface displayed on the mobile phone is shown in FIG. 12(a), that is, when a "Scenario" control in a menu is selected, scenario information of the user of the mobile phone is displayed in a content display area. The content display area further includes a "Smart button" control.

Further, if the mobile phone detects an operation 1 and the operation 1 is tapping the "Smart button" control in the interface shown in FIG. 12(a), a small window shown in FIG. 12(a) may be displayed. The small window shown in FIG. 12(a) includes an "Associate a scenario" control and a "View a scenario" control.

If the mobile phone detects an operation 2 (the second operation may be the operation 2 herein) of the user, and the operation 2 may be tapping the "Associate a scenario" control in the small window shown in FIG. 12(a), as shown in FIG. 12(b), the mobile phone may determine whether there is a smart button bound to the mobile phone. If there is no smart button bound to the mobile phone, the mobile phone may display the first prompt information. The first prompt information is used to prompt the user to perform one-tap between the smart button and the mobile phone. For example, as shown in FIG. 12(c), the mobile phone may display the first prompt information in the interface. The first prompt information may be a piece of text, that is, "One-tap on a smart button to be bound".

S1103: When detecting that the smart home device approaches the mobile phone, the mobile phone sends a message c1 to the smart home device, where the message c1 is used to request an identifier of the smart home device.

S1104: After receiving the message c1, the smart home device sends a message c2 to the mobile phone, where the message c2 includes the identifier of the smart home device.

S1105: The mobile phone sends a message c3 to a cloud server, where the message c3 includes the identifier of the smart home device.

S1106: After receiving the message c3, the cloud server sends a message c4 to the mobile phone, where the message c4 includes a virtual identifier and/or authentication information of the smart home device.

S1107: The mobile phone sends a message c5 to the smart home device, where the message c5 includes the authentication information of the smart home device.

Herein, for an implementation in which the mobile phone sends the message c5 to the smart home device, refer to S504. Details are not described again.

S1108: The mobile phone sends a message c6 to at least one gateway bound to the mobile phone, where the message c6 includes the identifier of the smart home device, and the message c6 indicates the at least one gateway to detect signal quality between the at least one gateway and the smart home device and report the signal quality to the cloud server when the smart home device is in a to-be-paired state; and correspondingly, the at least one gateway receives the message c6, and marks the smart home device as a to-be-paired device.

S1109: The mobile phone detects a third operation of selecting the at least one scenario by the user, and sends a message c7 to the cloud server, where the message c7 indicates the at least one scenario that needs to be associated with the smart home device.

For example, the message c7 may include the virtual identifier (or the identifier) of the smart home device and an identifier of the at least one scenario.

S1110: The cloud server creates a second scenario based on the message c7, where a condition of the second scenario is that a state of the smart home device changes, and an action in the second scenario is to execute the at least one scenario; and sends a message c8 to the mobile phone, where the message c8 indicates that the smart home device has been associated with the at least one scenario.

S1111: After receiving the message c8, the mobile phone displays second prompt information, where the second prompt information is used to prompt the user to move the smart home device close to a to-be-paired gateway.

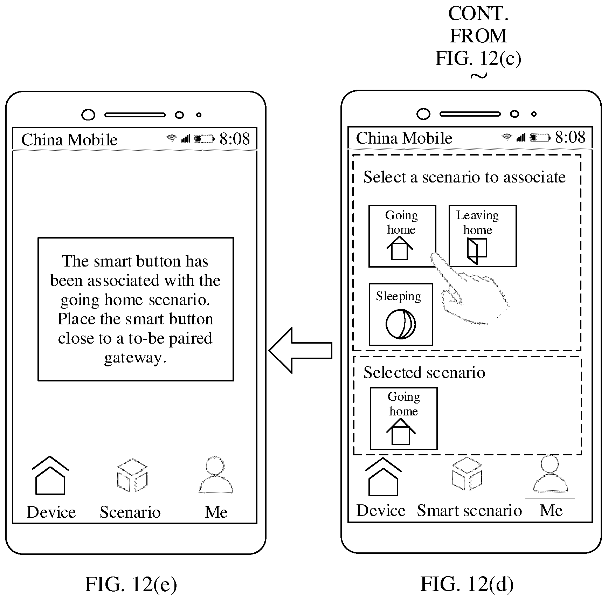

For S1109 to S1111, the foregoing example is still used. As shown in FIG. 12(d), the mobile phone may prompt, in an interface, the user to select a scenario associated with the smart button. If the scenario selected by the user is a going home scenario (that is, the at least one scenario includes the going home scenario), the mobile phone may send the message c7 to the cloud server. The message c7 is used to request to associate the smart button with the going home scenario. For example, the message c7 may include a virtual identifier (or an identifier) of the smart button and an identifier of the going home scenario. Correspondingly, after receiving the message c7, the cloud server may create a new scenario (that is, the second scenario) based on the message c7. A condition (condition) of the second scenario is that a state of the smart button changes (for example, the user taps (click) a button on the smart button). An action (action) in the second scenario is to execute the going home scenario (that is, enabling or disabling the going home scenario). The second scenario may be understood as a nested scenario or a shell scenario.

Further, after creating the second scenario, the cloud service may send the message c8 to the mobile phone. Further, after receiving the message c8, the mobile phone may display the second prompt information in the interface. The second prompt information may be a piece of text, that is, "The smart button has been associated with the going home scenario. Place the smart button close to the to-be-paired gateway", as shown in FIG. 12(e).

S1112: The at least one gateway detects the signal quality between the at least one gateway and the smart home device, and reports the signal quality to the cloud server.

S1113: The cloud server sends a message c9 to the first gateway based on the signal quality reported by the at least one gateway, where the message c9 indicates the first gateway to be paired with the smart home device.

S1114: After receiving the message c9, the first gateway performs pairing with the smart home device based on the message c9.

S1115: The first gateway sends a message c10 to the mobile phone, where the message c10 indicates that the first gateway and the smart home device are successfully paired.

In this way, after receiving the message c10, the mobile phone may determine that the smart home device is successfully bound to the mobile phone. For a subsequent implementation, refer to the conventional technology. For example, the smart button is associated with the going home scenario. In a possible implementation, a button is disposed on the smart button. If the user presses the button on the smart button, the smart button may send a message c11 to the cloud server through the first gateway. The message c11 includes the identifier of the smart button and status change indication. For example, the status change indication is tapping (click) a button. Correspondingly, after receiving the message c11, the cloud server may parse the message c11 through a cloud linkage platform, and determine, after the parsing, that the condition of the second scenario is met. Further, the cloud server executes the going home scenario (specifically, if the cloud server detects that the going home scenario is in a disabled state, the cloud server may enable the going home scenario; or if the cloud server detects that the going home scenario is in an enabled state, the cloud server may disable the going home scenario).

It may be understood that the foregoing uses an example in which the smart button is associated with one scenario. The user may also associate the smart button with a plurality of scenarios. For example, scenarios selected by the user include the going home scenario and a leaving home scenario. In this case, if the user presses the button on the smart button, the cloud server may enable the going home scenario. If the button on the smart button is pressed again, the cloud server may enable the leaving home scenario.

In addition, after the smart home device is paired with the first gateway, if the user changes a location of the smart home device, the user may replace the gateway paired with the smart home device. For a specific implementation, refer to Embodiment 1. Details are not described again.

### Embodiment 3

In Embodiment 3, another possible implementation is described by using an example in which the smart home device is a smart button.

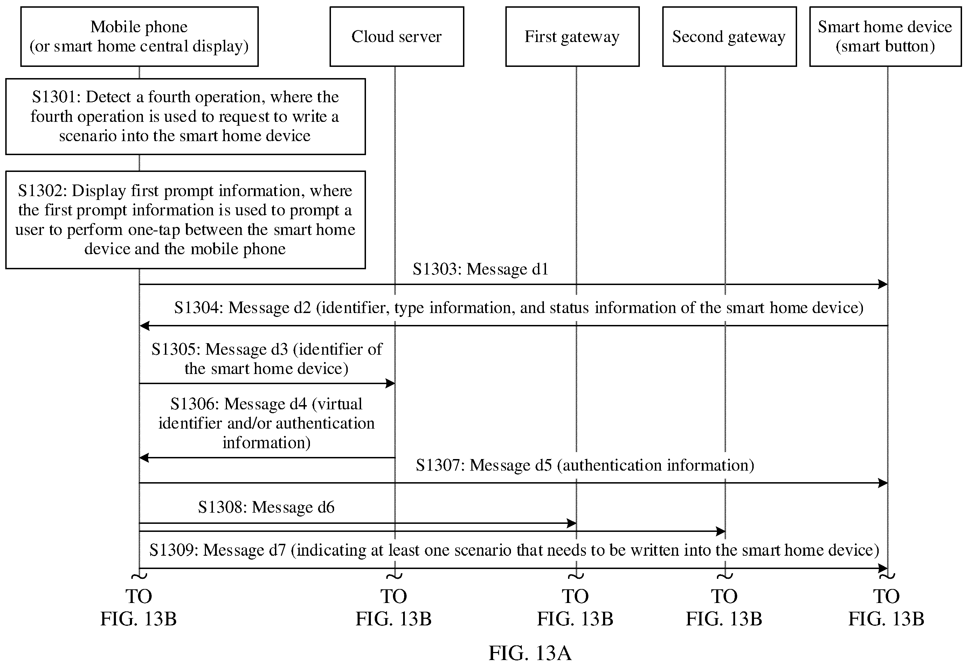

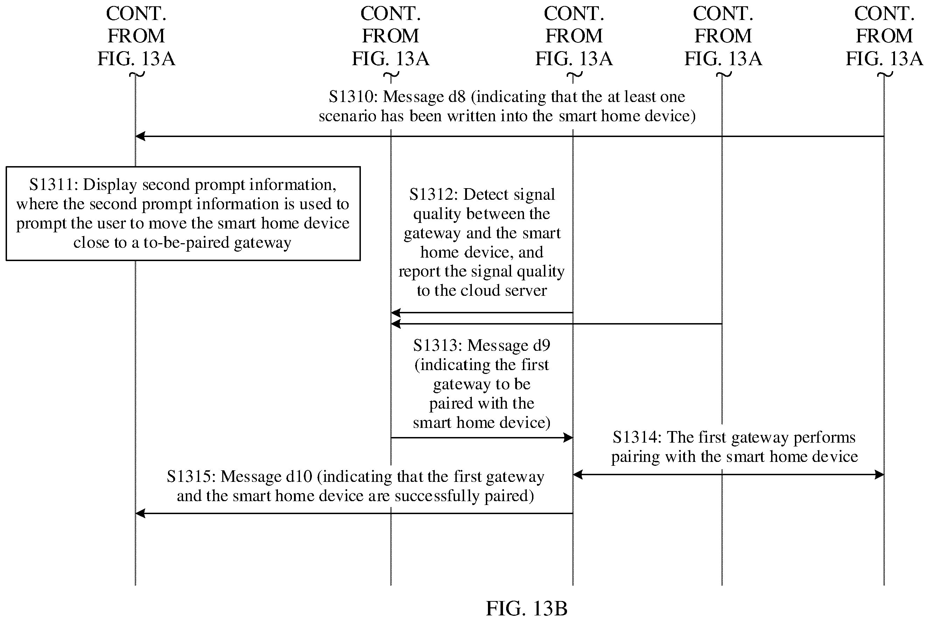

FIG. 13A and FIG. 13B are a schematic flowchart corresponding to a method according to Embodiment 3 of this application. As shown in FIG. 13A and FIG. 13B, the method may include the following steps.

S1301: A mobile phone detects a fourth operation, where the fourth operation is used to request to write at least one scenario into the smart home device.

S1302: The mobile phone displays first prompt information in response to the fourth operation, where the first prompt information is used to prompt a user to perform on-tap between the smart home device and the mobile phone.

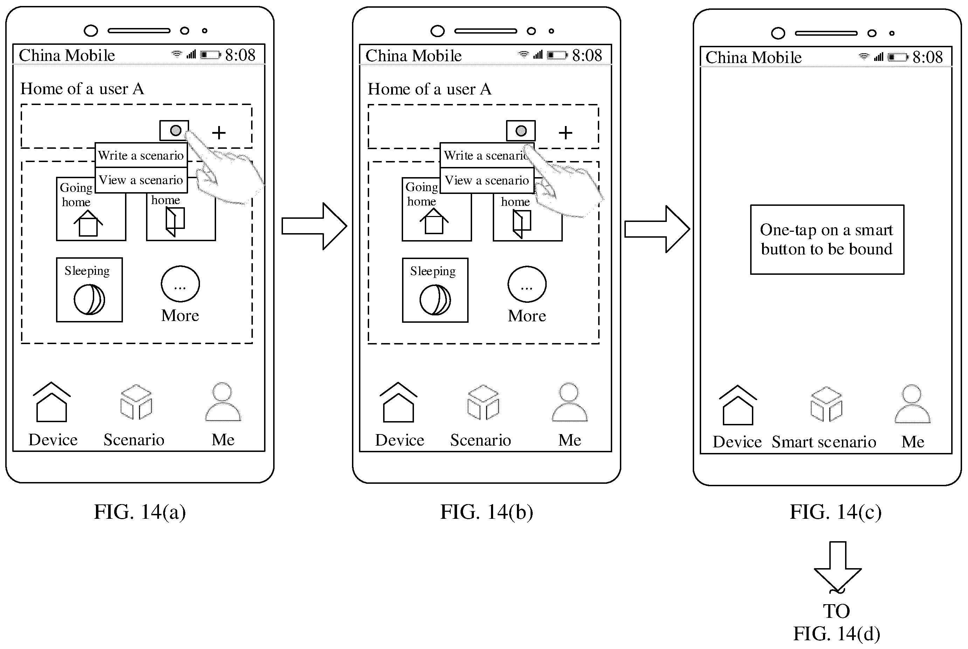

For example, as described above, the user may log in, by using a user account and a password of the user, to an application or a web page that is installed on the mobile phone and that is used to manage the smart home device. For example, an interface displayed on the mobile phone is shown in FIG. 14(a), that is, when a "Scenario" control in a menu is selected, scenario information of the user of the mobile phone is displayed in a content display area. The content display area further includes a "Smart button" control.

Further, if the mobile phone detects an operation 1 and the operation 1 is tapping the "Smart button" control in the interface shown in FIG. 14(a), a small window shown in FIG. 14(a) may be displayed. The small window shown in FIG. 14(a) includes a "Write a scenario" control and a "View a scenario" control.

If the mobile phone detects an operation 2 (the fourth operation may be the operation 2 herein) of the user, the operation 2 may be tapping the "Write a scenario" control in the small window shown in FIG. 14(a), as shown in FIG. 14(b), the mobile phone may determine whether there is a smart button bound to the mobile phone. If there is no smart button bound to the mobile phone, the mobile phone may display the first prompt information. The first prompt information is used to prompt the user to perform one-tap between the smart button and the mobile phone. For example, as shown in FIG. 14(c), the mobile phone may display the first prompt information in the interface. The first prompt information may be a piece of text, that is, "One-tap on a smart button to be bound".

S1303: When detecting that the smart home device approaches the mobile phone, the mobile phone sends a message d1 to the smart home device, where the message d1 is used to request an identifier of the smart home device.

S1304: After receiving the message d1, the smart home device sends a message d2 to the mobile phone, where the message d2 includes the identifier of the smart home device.

S1305: The mobile phone sends a message d3 to a cloud server, where the message d3 includes the identifier of the smart home device.

S1306: After receiving the message d3, the cloud server sends a message d4 to the mobile phone, where the message d4 includes a virtual identifier and/or authentication information of the smart home device.

S1307: The mobile phone sends a message d5 to the smart home device, where the message d5 includes the authentication information of the smart home device.

Herein, for an implementation in which the mobile phone sends the message d5 to the smart home device, refer to S504. Details are not described again.

S1308: The mobile phone sends a message d6 to at least one gateway bound to the mobile phone, where the message d6 includes the identifier of the smart home device, and the message d6 indicates the at least one gateway to detect signal quality between the at least one gateway and the smart home device and report the signal quality to the cloud server when the smart home device is in a to-be-paired state; and correspondingly, the at least one gateway receives the message d6, and marks the smart home device as a to-be-paired device.

S1309: The mobile phone detects a fifth operation of selecting at least one scenario by the user, and sends a message d7 to the smart home device, where the message d7 indicates the at least one scenario that needs to be written into the smart home device.

For example, the message d7 may include an identifier of the at least one scenario.

S1310: The smart home device writes the at least one scenario into the smart home device based on the message d7, and sends a message d8 to the mobile phone, where the message d8 indicates that the at least one scenario has been written into the smart home device.

S1311: After receiving the message d8, the mobile phone displays second prompt information, where the second prompt information is used to prompt the user to move the smart home device close to a to-be-paired gateway.

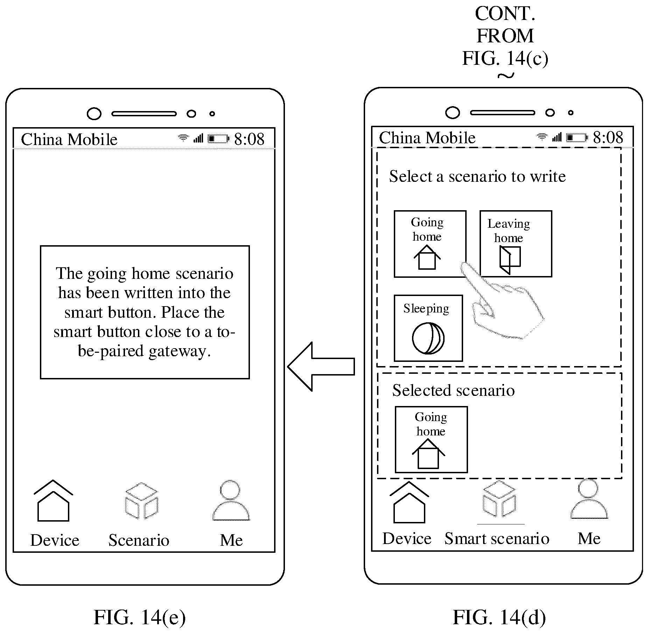

The foregoing example is still used. As shown in FIG. 14(d), the mobile phone may prompt, in the interface, the user to select a scenario to be written into the smart button. After the user selects to write a going home scenario, the mobile phone may send the message d7 to the smart button. The message d5 is used to request to write the going home scenario into the smart button. For example, the message d7 includes an identifier of the going home scenario. Correspondingly, after receiving the message d7, the smart button may write the going home scenario into the smart button (for example, store the identifier of the going home scenario, and associate a status change of the smart button with execution of the going home scenario), and send a message d8 to the mobile phone. Further, after the mobile phone receives the message d8, the second prompt information may be displayed in the interface. The second prompt information may be a piece of text, that is, "The going home scenario has been written into the smart button. Place the smart button close to the to-be-paired gateway", as shown in FIG. 14(e).

S1312: The at least one gateway detects the signal quality between the at least one gateway and the smart home device, and reports the signal quality to the cloud server.

S1313: The cloud server sends a message d9 to the first gateway based on the signal quality reported by the at least one gateway, where the message d9 indicates the first gateway to be paired with the smart home device.

S1314: After receiving the message d9, the first gateway performs pairing with the smart home device.

S1315: The first gateway sends a message d10 to the mobile phone, where the message d10 indicates that the first gateway and the smart home device are successfully paired.

In this way, after receiving the message d10, the mobile phone may determine that the smart home device is successfully bound to the mobile phone. For a subsequent implementation, refer to the conventional technology. For example, the going home scenario is written into the smart button. In a possible implementation, a button is disposed on the smart button. If the user presses the button on the smart button, the smart button may send a message d11 to the cloud server through the first gateway. The message d11 includes an identifier of the smart button, status change indication, and the identifier of the going home scenario. For example, the status change indication may be tapping a button. Correspondingly, after receiving the message d11, the cloud server may execute the going home scenario based on the message d11 (specifically, if the cloud server detects that the going home scenario is in a disabled state, the cloud server may enable the going home scenario; or if the cloud server detects that the going home scenario is in an enabled state, the cloud server may disable the going home scenario).

In addition, after the smart home device is paired with the first gateway, if the user changes a location of the smart home device, the user may replace the gateway paired with the smart home device. For a specific implementation, refer to Embodiment 1. Details are not described again.

For Embodiment 1 to Embodiment 3, it should be noted that:
(1) Embodiment 1 to Embodiment 3 are described by using an example in which the gateway reports the signal quality to the cloud server, and the cloud server determines which gateway is paired with the smart home device. In another possible embodiment, if the gateway communicates with the cloud server through a service hub, the gateway may also report the signal quality to the service hub, and the service hub determines which gateway is paired with the smart home device. A specific implementation may be implemented by the cloud server. In addition, the cloud server in S914 and S915 in Embodiment 1 may also be replaced with the service hub.
(2) Step numbers in the flowcharts described in Embodiment 1 to Embodiment 3 are merely an example of an execution procedure, and do not constitute a limitation on an execution sequence of the steps. In embodiments of this application, there is no strict execution sequence between steps that do not have a time sequence dependency relationship with each other. In addition, not all steps shown in each flowchart are necessarily performed steps, and some steps may be added or deleted for each flowchart based on an actual requirement.
(3) The foregoing focuses on differences between different embodiments in Embodiment 1 to Embodiment 3. For other content except the differences, mutual reference may be made among Embodiment 1 to Embodiment 3.

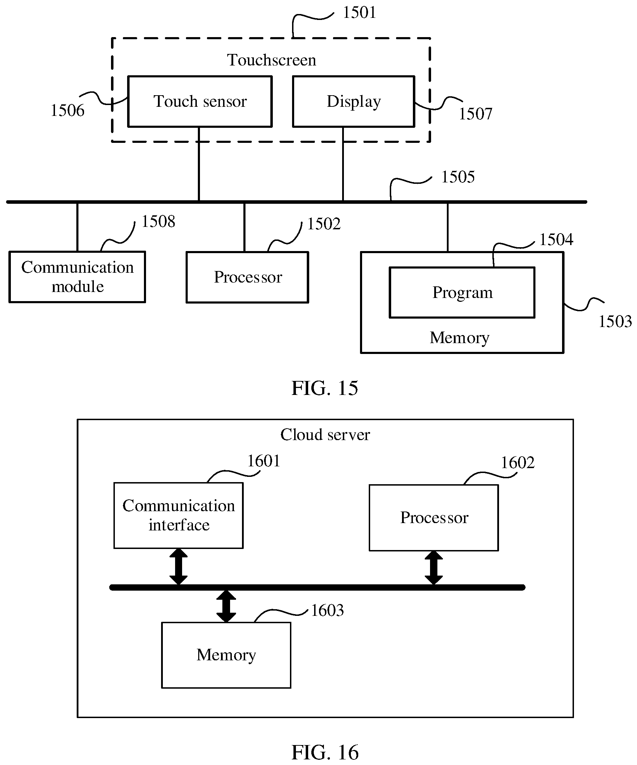

As shown in FIG. 15, an embodiment of this application discloses a device. The device may be the foregoing first device (for example, a mobile phone or a smart home central display). The device may specifically include: a touchscreen 1501, where the touchscreen 1501 includes a touch sensor 1506 and a display 1507; one or more processors 1502; a memory 1503; a communication module 1508; one or more applications (not shown); and one or more programs 1504. The foregoing components may be connected through one or more communication buses 1505. The one or more programs 1504 are stored in the memory 1503 and are configured to be executed by the one or more processors 1502. The one or more programs 1504 include instructions, and the instructions may be used to perform related steps performed by the mobile phone in the foregoing embodiments.

As shown in FIG. 16, an embodiment of this application discloses a device. The device may be the foregoing second device (for example, a cloud server). The cloud server may include a communication interface 1601, a processor 1602, and a memory 1603. Further, the cloud server may further include a bus system. The processor 1602, the memory 1603, and the communication interface 1601 may be connected through the bus system.

The processor 1602 may be a chip. For example, the processor 1602 may be a field programmable gate array (field programmable gate array, FPGA), an application specific integrated circuit (application specific integrated circuit, ASIC), a system on chip (system on chip, SoC), a central processing unit (central processing unit, CPU), a network processor (network processor, NP), a DSP, a micro controller unit (micro controller unit, MCU), a programmable controller (programmable logic device, PLD), or another integrated chip. The memory 1603 may be a volatile memory or a nonvolatile memory, or may include both the volatile memory and the nonvolatile memory. The communication interface 1601 may be configured to input and/or output information. In an optional implementation solution, when the cloud server includes a transceiver, method steps performed by the communication interface 1601 may alternatively be performed by the transceiver.

The memory 1603 is configured to store instructions for executing embodiments of this application. The processor 1602 is configured to execute the instructions stored in the memory 1603, to implement the method provided in embodiments of this application. Alternatively, optionally, in this embodiment of this application, the processor 1602 may perform a processingrelated function in the method provided in embodiments of this application, and the communication interface 1601 is responsible for communicating with another device or a communication network. This is not specifically limited in this embodiment of this application. Optionally, the instructions in this embodiment of this application may also be referred to as application program code or a program. This is not specifically limited in this embodiment of this application.

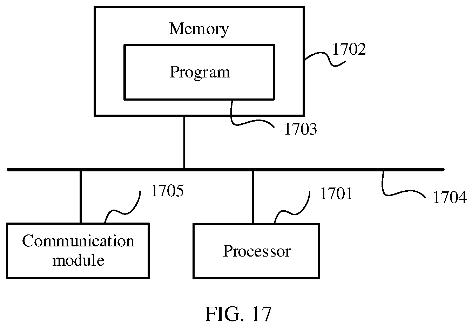

As shown in FIG. 17, an embodiment of this application discloses a device. The device may be the foregoing first gateway. The device may specifically include one or more processors 1701, a memory 1702, a communication module 1705, one or more applications (not shown), and one or more programs 1703. The foregoing components may be connected through one or more communication buses 1704. The one or more programs 1703 are stored in the memory 1702 and are configured to be executed by the one or more processors 1701. The one or more programs 1703 include instructions, and the instructions may be used to perform related steps performed by the cloud server in the foregoing embodiments.

According to the context, the term "when" or "after" used in the foregoing embodiments may be interpreted as a meaning of "if" or "after" or "in response to determining" or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". In addition, in the foregoing embodiments, relationship terms such as first and second are used to distinguish one entity from another entity, but are not intended to limit any actual relationship and sequence between these entities.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

All or some of the foregoing embodiments may be implemented by using software, hardware, firmware, or any combination thereof. When software is used to implement embodiments, embodiments may be implemented completely or partially in a form of a program product. The program product includes one or more instructions. When the program instructions are loaded and executed on a device, the procedure or functions according to embodiments of the present invention are all or partially generated. The device includes but is not limited to a general-purpose computer, a special-purpose computer, a computer network, or another device.

## Claims

1. A smart home device management method, wherein the method is applicable to a first device, and the method comprises:
sending a first message to at least one gateway bound to the first device, wherein the first message comprises an identifier of a smart home device, and the first message indicates the at least one gateway to detect signal quality between the at least one gateway and the smart home device and report the signal quality to a second device when the smart home device is in a to-be-paired state; and
receiving a second message from a first gateway in the at least one gateway, wherein the second message indicates that the first gateway and the smart home device are successfully paired, wherein
the second message is sent by the first gateway after the first gateway and the smart home device are successfully paired based on a third message from the second device, the third message indicates the first gateway to be paired with the smart home device, and the third message is selected by the second device from the at least one gateway based on the signal quality reported by the at least one gateway, and sent to the first gateway.

2. The method according to claim 1, wherein signal quality between the first gateway and the smart home device is greater than or equal to signal quality between another gateway in the at least one gateway and the smart home device.

3. The method according to claim 1 or 2, wherein before sending the first message to the at least one gateway bound to the first device, the method further comprises:
sending a fourth message to the smart home device when detecting that the smart home device approaches the first device, wherein the fourth message is used to request the identifier of the smart home device; and
receiving a fifth message from the smart home device, wherein the fifth message comprises the identifier of the smart home device.

4. The method according to claim 3, wherein before detecting that the smart home device approaches the first device, the method further comprises:
detecting a first operation, wherein the first operation is used to request to add the smart home device to a first scenario; and
displaying first prompt information in response to the first operation, wherein the first prompt information is used to prompt a user to perform one-tap between the smart home device and the first device.

5. The method according to claim 4, wherein after sending the first message to the at least one gateway bound to the first, and before receiving the second message from the first gateway in the at least one gateway, the method further comprises:
adding the smart home device to the first scenario, and displaying second prompt information, wherein the second prompt information is used to prompt the user to move the smart home device close to a to-be-paired gateway.

6. The method according to claim 1 or 2, wherein before detecting that the smart home device approaches the device, the method further comprises:
detecting a second operation, wherein the second operation is used to request the smart home device to be associated with at least one scenario; and
displaying first prompt information in response to the second operation, wherein the first prompt information is used to prompt a user to perform one-tap between the smart home device and the first device.

7. The method according to claim 6, wherein after sending the first message to the at least one gateway bound to the first device, and before receiving the second message from the first gateway in the at least one gateway, the method further comprises:
associating the smart home device with the at least one scenario, and displaying second prompt information, wherein the second prompt information is used to prompt the user to move the smart home device close to a to-be-paired gateway.

8. The method according to any one of claims 3 to 7, wherein the fifth message further comprises one or more of the following:
type information of the smart home device, wherein the type information indicates a type of the smart home device; and
status information of the smart home device, wherein the status information indicates that the smart home device is in a to-be-bound state.

9. The method according to any one of claims 1 to 8, wherein before sending the first message to the at least one gateway bound to the first device, the method further comprises:
sending a sixth message to a third device, wherein the sixth message comprises the identifier of the smart home device; and
receiving a seventh message sent by the third device based on the sixth message, wherein the seventh message comprises a virtual identifier and/or authentication information of the smart home device, the virtual identifier is associated with the identifier, and the authentication information is used by the smart home device to communicate with a gateway paired with the smart home device; wherein
the first message further comprises the virtual identifier and/or the authentication information.

10. A smart home device management method, wherein the method is applicable to a second device, and the method comprises:
receiving signal quality that is between at least one gateway bound to a first device and a smart home device and that is reported by the at least one gateway;
selecting a first gateway from the at least one gateway based on the signal quality between the at least one gateway and the smart home device; and
sending a third message to the first gateway, wherein the third message indicates the first gateway to be paired with the smart home device.

11. The method according to claim 10, wherein the method further comprises:
receiving an eighth message from the first gateway, wherein the eighth message indicates that a connection between the smart home device and the first gateway is abnormal; and
sending a ninth message to the at least one gateway based on the eighth message, wherein the ninth message indicates the at least one gateway to detect the signal quality between the at least one gateway and the smart home device and report the signal quality to the second device when the smart home device is in a to-be-paired state.

12. A smart home device management method, wherein the method is applicable to a first gateway, and the method comprises:
receiving a first message from a first device, wherein the first message indicates the first gateway to detect signal quality between the first gateway and a smart home device and report the signal quality to a second device when the smart home device is in a to-be-paired state;
when the smart home device is in the to-be-paired state, detecting the signal quality between the first gateway and the smart home device based on the first message; and
sending the detected signal quality to the second device.

13. The method according to claim 12, wherein the method further comprises:
receiving a third message from the second device, wherein the third message indicates the first gateway to be paired with the smart home device; and
performing pairing with the smart home device based on the third message, and sending a second message to the first device after the pairing succeeds, wherein the second message indicates that the first gateway and the smart home device are successfully paired.

14. A first device, wherein the device comprises:
one or more processors;
a memory; and
a communication module, wherein
the memory stores one or more programs, the one or more programs comprise instructions, and when the instructions are executed by the first device, the first device is enabled to perform the method according to any one of claims 1 to 9.

15. A second device, wherein the device comprises:
one or more processors;
a memory; and
a communication module, wherein
the memory stores one or more programs, the one or more programs comprise instructions, and when the instructions are executed by the second device, the second device is enabled to perform the method according to claim 10 or 11.

16. A first gateway, wherein the device comprises:
one or more processors;
a memory; and
a communication module, wherein
the memory stores one or more programs, the one or more programs comprise instructions, and when the instructions are executed by the first gateway, the first gateway is enabled to perform the method according to claim 12 or 13.

17. A smart home device management system, wherein the system comprises the first device according to claim 14, the second device according to claim 15, and the first gateway according to claim 16.

18. A readable storage medium, wherein the readable storage medium is configured to store a program, and when the program is run on a device, the device is enabled to perform the method according to any one of claims 1 to 13.

19. A computer program product, wherein when a computer reads and executes the computer program product, the computer is enabled to perform the method according to any one of claims 1 to 13.
